# EUROPEAN PATENT APPLICATION

(11) **EP 4 527 904 A1**
(43) Date of publication of application: **26.03.2025**
(21) Application number: 23198627.4
(22) Date of filing: 20.09.2023
(51) Int. Cl.: C09K 11/02, C09K 11/77, H05B 33/14, H05B 33/20

(54) **METHOD FOR TREATING LUMINESCENT NANOPARTICLES**

(71) Applicant: Seaborough Materials Ip B.V., 1098 XG Amsterdam (NL)
(72) Inventor: SONTAKKE, Atul Dnyaneshwar, 1363 BL Almere (NL); VAN DE HAAR, Marie Anne, 1381 HL Weesp (NL); MONTANARELLA, Federico, 3581 LG Utrecht (NL); KHANIN, Vasilii Mikhailovich, 1096 HV Amsterdam (NL)
(74) Representative: Hoyng Rokh Monegier B.V.

(57) **Abstract**

The invention provides a method for providing composite luminescent particles, comprising: (a) providing (i) a luminescent material, comprising (A₁₋ₓBₓ)₃(C_{1-y}D_{y})₅O₁₂ nanoparticles or a precursor therefor, wherein A comprises one or more of yttrium, lutetium, gadolinium, lanthanum; B comprises one or more rare earth elements; C comprises one or more of aluminum, gallium, and scandium; D comprises one or more transition metal ions; and wherein 0≤x≤1, 0≤y≤1, and x+y>0; and (ii) further providing a precursor of an oxide material, wherein said oxide material has a melting point of at least 850°C; (b) mixing said (i) luminescent material comprising (A₁₋ₓBₓ)₃(C_{1-y}D_{y})₅O₁₂ nanoparticles or a precursor therefor and (ii) said precursor of an oxide material; (c) curing said precursor of said oxide material to obtain a cured particle, said cured particle comprising said luminescent material, and a coating of said oxide material; (d) heating said cured particle at a first temperature for a first duration, wherein said first temperature is 600 °C or higher, wherein said first duration is 10 minutes or more; and (e) heating said cured particle under a reducing atmosphere comprising carbon monoxide at a second temperature for a second duration, wherein said second temperature is 700 °C or higher, and wherein said second duration is 1 hour or more.

## Description

### Field of the invention

The invention relates to treating luminescent nanoparticles. The invention further relates to obtaining luminescent nanoparticles from precursor particles. The invention further relates to the treated or obtained luminescent nanoparticles. The invention further relates to luminescent compositions comprising the treated or obtained luminescent nanoparticles, and methods of making said luminescent compositions. The invention further relates to applications of and devices comprising the luminescent nanoparticles, or the luminescent compositions of the invention.

### Background of the invention

Luminescent down-conversion materials play an important role in solid-state lighting devices for illumination and display applications, among others. Such materials may also be used as taggants, for example in security inks.

Nanomaterials are of interest, due to their small volume. In theory, nanoparticles would be easy to incorporate into different applications. However, suitable nanomaterials may have poor quality (chemical, stability, optical and/or physical) due to their small size and poor crystallinity. WO2021043762A1 teaches annealing nanoparticles improves lattice densification (quality), homogeneity and phase purity as well as photoluminescence properties. However further improvements are required.

Cerium doped-yttrium aluminum garnet (YAG:Ce) is the benchmark phosphor for solid-state LED lighting. In microcrystalline form (or as bulk single crystals/ceramics), YAG:Ce is highly efficient; however, at nanoscale, it often suffers from weak emission intensity, low conversion efficiency and poor stability, primarily attributed to the high surface-to-volume ratio of nanoparticles and associated poor Ce homogeneity throughout the nanoparticle lattice.

Wet-chemical synthesis (solvothermal, precipitation, sol-gel, etc.) offers YAG:Ce nanoparticles with sizes as low as 5 nm. Such as-synthesized nano YAG:Ce may possess impurity phases, a weaker lattice and poor photoluminescence (PL) properties.

Revaux et al., Nanoscale, 2011, 3, 2015-2022, discloses solvothermal synthesis of YAG:Ce nanoparticles, followed by incorporation in porous silica matrix, followed by drying and grinding. The powder is then annealed at 1000 °C for 12 hours in air, and 600 °C in Ar/10% H₂ for 12 hours. The photoluminescence quantum yield (PLQY) was reported to be about 60% for finalized material. The PL stability was also improved, compared to as-synthesized solvothermal precursor nanoparticles.

WO2018/167266 discloses compositions comprising a light emitting material and a sensitizer material, wherein the light emitting material and the sensitizer material are selected such that the sensitizer material has an emission spectrum which overlaps at least partly with one or more excitation bands of the light emitting material and wherein the light emitting material and sensitizer material are so arranged to each other to allow non-radiative energy transfer from the sensitizer material to the light emitting material. This application also describes methods for the preparation thereof.

Non-radiative energy transfer (sometimes also referred to as Fluorescent Resonance Energy Transfer, FRET) from the sensitizer material to the light emitting material involves the non-radiative transfer of energy from an excited sensitizer ion in the sensitizer material to an acceptor (or emitter) ion in the light emitting material. It is evidenced by increased emission from an emitter ion in the light emitting material upon selective excitation of the sensitizer ion in the sensitizer material.

Nanomaterials are of interest due to their high surface area and small volume, which enables to arrange luminescent materials close in space to harness inter-particle FRET. To be able to effectively harness inter-particle FRET, it is desirable to have very small size (<10 nm) luminescent particles.

Thus, there remains a need for luminescent nanomaterials having improved quality and stability at small sizes. Further, there is a need for luminescent compositions exhibiting high photoluminescence quantum yield (QY) and improved stability, and for methods for the preparation thereof.

### Summary of the invention

There is provided a method for providing composite luminescent particles, comprising:
(a) providing (i) a luminescent material, comprising (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; and C comprises one or more of aluminum, gallium, and scandium; D comprises one or more transition metal ions; and wherein 0≤x≤1, 0≤y≤1, and x+y>0; and (ii) further providing a precursor of an oxide material, wherein said oxide material has a melting point of at least 850°C;
(b) mixing said (i) luminescent material comprising (A₁₋ₓBₓ)₃(C_{1-y}D_{y})₅O₁₂ nanoparticles and (ii) said precursor of an oxide material;
(c) curing said precursor of said oxide material to obtain a cured particle, said cured particle comprising said luminescent material, and a coating of said oxide material;
(d) heating said cured particle at a first temperature for a first duration, wherein said first temperature is 600 °C or higher, wherein said first duration is 10 minutes or more; and
(e) heating said cured particle under a reducing atmosphere comprising carbon monoxide at a second temperature for a second duration, wherein said second temperature is 700°C or higher, and wherein said second duration is 1 hour or more;
wherein preferably said (A₁₋ₓBₓ)₃(C_{1-y}D_{y})₅O₁₂ nanoparticles are obtained by a solvothermal method, more preferably by a glycothermal method.

There is further provided a method for obtaining composite luminescent particles comprising:
(a) providing (i) a precursor material for (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; C comprises one or more of aluminum, gallium, and scandium; and D comprises one or more transition metal ions; and wherein 0≤x≤1, 0≤y≤1, and x+y>0; and (ii) further providing a precursor of an oxide material, wherein said oxide material has a melting point of at least 850°C;
(b) mixing (i) said precursor material and (ii) said precursor of an oxide material;
(c) curing said precursor of said oxide material to obtain a cured particle, said cured particle comprising said precursor material, and a coating of said oxide material;
(d) heating said cured particle at a first temperature for a first duration, wherein said first temperature is 600 °C or higher, wherein said first duration is 10 minutes or more; and
(e) heating said cured particle under a reducing atmosphere comprising carbon monoxide at a second temperature for a second duration, wherein said second temperature is 700 °C or higher, and wherein said second duration is 1 hour or more;
wherein said precursor material is preferably obtained from a precipitation method.

It has been found that the methods of the invention allow to obtain luminescent particles showing high photoluminescence quantum yield, improved spectral properties and improved photostability.

There is further provided a composite luminescent particle obtained via the methods of the invention, comprising (i) (A₁₋ₓBₓ)₃(C_{1-y}D_{y})₅O₁₂ nanoparticles, and (ii) a coating of an oxide material having a melting point of 850°C or higher, wherein A comprises one or more of yttrium, lutetium, gadolinium, lanthanum; B comprises one or more rare earth elements; C comprises one or more of aluminum, gallium, and scandium; D comprises one or more transition metal ions; and 0≤x≤1, 0≤y≤1, and x+y>0, said composite luminescent particle having:
- a photoluminescence quantum yield of more than 60%, preferably more than 80%;
- a storage photostability such that the photoluminescence intensity after two weeks of storage in a non-inert atmosphere is at least 80% of the initial photoluminescence intensity;
- a photostability under illumination such that at least 50% of the initial photoluminescence intensity remains after 10 hours, preferably at least 50% of the initial photoluminescence intensity after 15 hours, under > 0.1 W/cm² illumination at a suitable excitation wavelength; and
- when B comprises cerium, a peak ratio in the excitation spectra (between 455 nm and 380 nm) of more than 20.

There is further provided luminescent compositions.

There is provided a luminescent composition, comprising a first luminescent material and a second luminescent material, wherein at least one of the first luminescent material and the second luminescent material comprises the composite luminescent particle of the invention, preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material, more preferably wherein the first luminescent material and the second luminescent material so arranged to each other to allow non-radiative energy transfer from the second luminescent material to the first luminescent material, more preferably wherein both the first luminescent material and the second luminescent material comprise composite luminescent particles according to the invention.

There is further provided a luminescent composition, obtained by the method according to the invention, comprising (i) a first luminescent material comprising (A₁₋ₓBₓ)₃(C_{1-y}D_{y})₅O₁₂ nanoparticles and (ii) a second luminescent material comprising nanoparticles of a rare-earth, s2-configuration ion or transition metal doped phosphor material, preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material, more preferably wherein the first luminescent material and the second luminescent material so arranged to each other to allow non-radiative energy transfer from the second luminescent material to the first luminescent material.

### Brief description of the figures

FIGURE 1 shows schematically luminescent particles according to the invention, A after coating and baking, and B after an additional etching step.
FIGURE 2 shows TEM images of co-precipitation method synthesized nano-YAG:Ce baked at 1025 °C according to Comparative Experiment A.
FIGURE 3 shows TEM images of solvothermal method synthesized nano-YAG:Ce baked at 1025 °C according to Comparative Experiment B.
FIGURE 4 shows TEM images of co-precipitation method synthesized nano-YAG:Ce baked at 1025 °C with silica encapsulation according to Example 1.
FIGURE 5 shows TEM images of solvothermal method synthesized nano-YAG:Ce baked at 1025 °C with silica encapsulation according to Example 2.
FIGURE 6 shows reflectance spectra of nano-YAG:Ce according to Comparative Experiment A (thin dashed line) and according to Example 1 (thick solid line).
FIGURE 7 shows reflectance spectra of nano-YAG:Ce according to Comparative Experiment E (thin dashed line) and Example 1 (thick solid line).
FIGURE 8 shows reflectance spectra of nano-YAG:Ce according to Comparative Experiment F (thin dashed line) and according to Example 2 (thick solid line).
FIGURE 9 shows TEM images of solvothermal method synthesized nano-YAG:Ce baked at 1025 °C with silica encapsulation and etching with 2M NaOH solutions for 24 hours according to Example 3.
FIGURE 10 shows TEM images of solvothermal method synthesized nano-YAG:Ce baked at 1025 °C with silica encapsulation, etched with 2M NaOH solutions for 24 hours and reannealed at 800 ⁰C for 8 hours in reducing atmosphere according to Example 4.

### Detailed description

There is provided a method for treating luminescent nanoparticles, and a method for obtaining luminescent nanoparticles. These methods differ in the provided material (i) in step (a).

Step (a) in both methods comprises providing (i) a luminescent material comprising, or a precursor material for, (A₁₋ₓBₓ)₃(C_{1-y}D_{y})₅O₁₂ nanoparticles, and (ii) further providing a precursor of an oxide material, wherein said oxide material has a melting point of at least 850°C.

### (i) luminescent material comprising (A₁₋ₓBₓ)₃(C_{1-y}D_{y})₅O₁₂ nanoparticles or precursor material for (A₁₋ₓBₓ)3(C_{1-y}D_{y})₅O₁₂ nanoparticles

Preferably, the luminescent material, or the precursor material, is provided as particles, wherein the D₅₀ value of the smallest dimension of said particles is > 0.5 nm and ≤ 100 nm. This allows to obtain domains within a matrix of the oxide material.

Preferably, the D₅₀ value of the smallest dimension of said particles of the luminescent material or said precursor material is > 0.5 nm and ≤ 50 nm, more preferably ≥ 0.5 nm and ≤ 20 nm, as measured using transmission electron microscopy (TEM).

Preferably, the D₅₀ value of said particles of the luminescent material or said precursor material is > 0.5 nm and < 100 nm. In the case of discrete particles, the D₅₀ value of said particles is more preferably > 0.5 nm and < 50 nm, even more preferably ≤ 20 nm. In the case of aggregated particles, the BET surface area is preferably ≥ 10 m²/g as measured using BET physisorption method, more preferably ≥ 15 m²/g, and the aggregate preferably has a D₅₀≤ 100 nm. Smaller particles allow to obtain smaller domains, which allows for better FRET.

### Luminescent material, comprising (A₁₋ₓBₓ)₃(C_{1-y}D_{y})₅O₁₂ nanoparticles

In a first embodiment, step (a) comprises providing (i) a luminescent material, comprising (A₁₋ₓBₓ)₃(C_{1-y}D_{y})ₛO₁₂ nanoparticles. A comprises one or more of yttrium, lutetium, gadolinium, lanthanum; B comprises one or more further rare earth elements; C comprises one or more of aluminum, gallium, and scandium; D comprises one or more transition metal ions; and 0≤x≤1, 0≤y≤1, and x+y>0.

Rare earth elements are herein defined as the elements of yttrium, scandium, lanthanum, cerium, praseodymium, neodymium, promethium, samarium, europium, gadolinium, terbium, dysprosium, holmium, erbium, thulium, ytterbium and lutetium. Transition metal ions are herein defined as any element having a d subshell that is partially filled with electrons, or an element that has the ability to form stable cations with an incompletely filled d orbital.

Preferably, B comprises one or more of the group of cerium, terbium europium. These ions show strong emission in the visible spectrum.

More preferably, B comprises cerium, and C comprises aluminum. These are nanoparticles of the type cerium-doped aluminum garnet, like yttrium aluminum garnet (YAG:Ce), lutetium aluminum garnet (LuAG:Ce), gadolinium aluminum garnet (GdAG:Ce), lanthanum aluminum garnet (LaAG:Ce), terbium aluminum garnet (TbAG:Ce), or combinations thereof like (Y,Lu)AG:Ce.

Preferably, D comprises one or more of the group of Mn²⁺, Mn⁴⁺ and/or Cr³⁺. These ions show strong emission in the visible spectrum.

Preferably, the luminescent nanoparticles are obtained by a solvothermal method. Solvothermal synthesis is performed by heating suspended metal salts in a solvent, resulting in colloidal solutions of ultrafine metal oxide particles. The particles obtained via solvothermal synthesis are generally discrete particles. Preferably, the D₅₀ value of said luminescent nanoparticles is ≥ 0.5 nm and ≤ 50 nm, more preferably ≥ 0.5 nm and ≤ 20 nm.

Preferably, the solvothermal method is a glycothermal method. In a glycothermal synthesis, a glycol is used as the solvent. Such a glycothermal method is for example described in J. Mater. Chem. C, 2017,5,12561. A glycol is an aliphatic diol. Suitable glycols for use in glycothermal synthesis are ethylene glycol, 1,2-propanediol, 1,2-butanediol, 1,3-propanediol, 1,4-butanediol. More preferably, the luminescent nanoparticles are obtained by a glycothermal method, wherein 1,4-butanediol is the glycol solvent.

Preferably, a co-solvent is used in the glycothermal method. A co-solvent can allow to reduce the size and aggregation of the nanoparticles. More preferably, the luminescent nanoparticles are obtained by a glycothermal method, wherein 1,4-butanediol is the glycol solvent, and further comprises a co-solvent which is at least one of ethylene glycol, diethylene glycol, and polyethylene glycol 200.

### Precursor material for (A₁₋ₓBₓ)₃(C_{1-y}D_{y})₅O₁₂ nanoparticles

In a second embodiment, step (a) comprises providing a precursor material for (A₁₋ₓBₓ)₃(C_{1-y}D_{y})₅O₁₂ nanoparticles. A comprises one or more of yttrium, lutetium, gadolinium, lanthanum; B comprises one or more rare earth elements; C comprises one or more of aluminum, gallium, and scandium; D comprises one or more transition metal ions; and 0≤x≤1, 0≤y≤1, and x+y>0.

The preferences for A, B, C and D apply as for the (A₁₋ₓBₓ)₃(C_{1-y}D_{y})₅O₁₂ nanoparticles.

Preferably, the precursor material is obtained via a precipitation method. Examples of precipitation methods are described in PCT/EP2022/086309, which is incorporated herein by reference, or PCT/EP2022/087966, which is incorporated herein by reference. More preferably, the precursor material is obtained via a precipitation reaction in a microjet reactor. Preferably, the precipitation method comprises contacting a first mixture comprising a solvent, and comprising salts of A, B, C, and/or D as appropriate, with a second mixture comprising a precipitating agent and a solvent. The salts are preferably selected from the group consisting of halides, acetates, acetylacetonates, sulfates, nitrates, and/or a hydrated form of these substances. The solvent is preferably a polar solvent. The precipitating agent is preferably a base. Precursor particles obtained via a precipitation method may form aggregated networks. The precursor particles preferably have a BET surface area of ≥ 10 m²/g, more preferably > 15 m²/g, as measured using BET physisorption method, and the total aggregate particle has a D₅₀ ≤ 100 nm as measured with TEM.

### (ii) further providing a precursor of an oxide material, wherein said oxide material has a melting point of at least 850°C

Preferably, said oxide precursor is selected from the groups of organosilicates, silicon salts, aluminium salts, magnesium salts, and phosphate salts.

More preferably said oxide precursor is selected from silicon salts, aluminium salts, magnesium salts, and phosphate salts, and said salts are selected from nitride salts or chloride salts. More preferably, said precursor is an ester of orthosilicic acid, preferably tetraethylorthosilicate (TEOS).

The oxide material has a melting point of 850°C or higher. Preferably, the melting point is 900 °C or higher, more preferably 1200 °C or higher. The high melting point allows to process the luminescent material comprising nanoparticles or precursor thereof, for example by annealing the materials, without the nanoparticles melting, sintering or clumping together. The melting point of the oxide material is therefore preferably higher than the annealing temperature.

Preferably, said oxide material is selected from the group of silicon oxides, aluminium oxides, or phosphates. More preferably, said oxide material is selected from the group of silica, alumina, magnesium oxide, and phosphates. These materials are physically, chemically and thermally stable. Preferably, said second material is silica, as this material exhibits good stability. Silica also can be readily dispersed in water and other hydrophilic solvents, thus making the composite luminescent particles suitable for various applications. The oxide material may be doped with luminescent ions in a certain embodiment.

The amount of precursor of an oxide material used may depend on the type of luminescent particles or precursor for luminescent particles, and on the type of precursor of an oxide material used. Generally, when TEOS is used, about 5 microlitres to about 1 ml is used per 100 mg of particles.

### (iii) further luminescent material

In a preferred embodiment, there is in step (a) also provided (iii) a further luminescent material comprising a rare-earth, s2-configuration ion or transition metal doped phosphor material, or a precursor thereof. This allows to obtain composite particles comprising both the (A₁₋ₓBₓ)₃(C_{1-y}D_{y})₅O₁₂ nanoparticles, and the further luminescent material.

In this disclosure, a rare-earth, s2-configuration ion or transition metal doped phosphor material is a material that is capable of luminescence, i.e., it emits light when exposed to some type of radiant energy, and is doped with rare-earth metal, s2-configuration ion or transition metal ions. As is known to the skilled person, doped phosphor materials comprise a host lattice doped with optically active ions. Rare-earth metal ions are as defined above. Transition metal ions are defined as above, and s2-configuration ions are defined as any ion having a s2 electron configuration. Examples of s2-configuration ions are Ge²⁺, Pb²⁺, and Bi3'.

Preferably, the further luminescent material is doped with the trivalent ion of at least one of cerium, europium, or terbium. These ions are capable of emitting in the visible spectrum upon suitable excitation, thus making them attractive for lighting.

Preferably, said further luminescent material is selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these. These materials form a lattice into which the rare-earth metal ions can be doped.

More preferably, said further luminescent material is selected from the group of oxides, garnets, phosphates, vanadates, or a combination thereof. Even more preferably, said luminescent material is selected from the group consisting of rare-earth, s2-configuration ion or transition metal doped Y₃A₅O₁₂, Lu₃Al₅O₁₂, Tb₃Al₅O₁₂, Y₂O₃, YVPO₄, YVO₄, or LaPO₄, or a combination thereof. These luminescent materials have been found to exhibit desirable optical characteristics.

Preferably, (i) the luminescent material comprising (A₁₋ₓBₓ)₃(C_{1-y}D_{y})₅O₁₂ nanoparticles or precursor material thereof, and (iii) the further luminescent material comprising a rare-earth, s2-configuration ion or transition metal doped phosphor material, or a precursor thereof, form separate domains within the oxide material, wherein said domains have dimensions, and the D₅₀ value of the smallest dimension of said domains is ≥ 0.5 nm and ≤ 100 nm, more preferably ≥ 0.5 nm and ≤ 50 nm, most preferably ≥ 0.5 nm and ≤ 20 nm, as measured using transmission electron microscopy (TEM). Preferably, the D₅₀ value of the domains is ≥ 0.5 nm and ≤ 100 nm. For discrete domains, the D₅₀ value of the domains is more preferably ≥ 0.5 nm and ≤ 50 nm, most preferably ≥ 0.5 nm and ≤ 20 nm. For networked domains, the BET surface area is more preferably ≥ 10 m²/g, more preferably ≥ 15 m²/g. The domain size thus does not include the oxide material coating. Domains of such sizes are suited to FRET. Such small domains are desirable, as they have a high surface area. The oxide material forms a stable matrix around said domains, thus preventing or at least largely limiting ion exchange or quenching. Additionally, the oxide material keeps the domains in place, such that the inter-domain distance stays the same, regardless of post-treatment.

### Step (b) mixing said (i) luminescent material comprising (A₁₋ₓBₓ)₃(C_{1-y}D_{y})₅O₁₂ nanoparticles and (ii) said precursor of an oxide material

Step (b) comprises mixing (i) said luminescent material or said precursor material, and (ii) said precursor of an oxide material.

In one embodiment, said mixing of step b) is performed by simply adding said precursor of said oxide material to a dispersion of the luminescent material or said precursor material. Preferably, said dispersion medium is a water/ethanol mixture. Preferably, said approach is according to the Stöber reaction.

In another embodiment, said mixing is performed by first preparing a water-in-oil microemulsion, wherein the luminescent material is in the core of the droplets, followed by addition of TEOS to the microemulsion. An example of such an approach is described in Koole, R.; van Schooneveld, M.M.; Hilhorst, J.; de Mello Donegá, C.; 't Hart, D.C.; van Blaaderen, A.; Vanmaekelbergh, D.; Meijerink, A. Chem. Mater. 2008, 20, 2503-2512.

Preferably, step b) comprises agitation. This allows the luminescent material or precursor material to stay in the dispersion and the precursor of the oxide material to be evenly distributed.

Preferably, after step b), but before step c), the mixture is further agitated, for example by ultrasonication. This further ensures even distribution of the precursor of the oxide material, and a good dispersion of the luminescent material.

When there is provided a (iii) a further luminescent material comprising a rare-earth, s2-configuration ion or transition metal doped phosphor material, or a precursor thereof, the distance between the domains of luminescent material inside the oxide material can be tuned by varying the method steps b) and c). This allows tuning depending on the material. A precise tuning of interparticle separation among the first luminescent material and the further luminescent material in the final composite luminescent particle gives control over energy transfer efficiency, thus a good control over the final luminescence spectral color.

In an embodiment, the method step (b) is performed in a single step such that a single mixture is formed. This results in the least amount of the distance between the domains. Tuning of the distance between the different domains is crucial since it allows for controlling the desirable energy transfer (smaller distances give higher energy transfer efficiencies), but also quenching effects (e.g. charge transfer quenching, for which there is less quenching for larger distances).

In an embodiment, the method step (b) comprises:
- mixing in a first vessel (i) said luminescent material comprising (A₁₋ₓBₓ)₃(C_{1-y}D_{y})₅O₁₂ nanoparticles or said precursor material for (A₁₋ₓBₓ)₃(C_{1-y}D_{y})₅O₁₂ nanoparticles, with (ii) said precursor of an oxide material, and in a second vessel mixing (iii) said further luminescent material or said precursor thereof with (ii) said precursor of an oxide material, and
- mixing said mixtures.

Mixing the luminescent materials separately with said precursor of an oxide material allows to tune the distance between the luminescent materials in the final particle. This embodiment therefore provides a medium amount of distance between the domains.

In an embodiment, the method step b) comprises:
b1) mixing in a first vessel (i) said luminescent material comprising (A₁₋ₓBₓ)₃(C_{1-y}D_{y})₅O₁₂ nanoparticles or said precursor material for (A₁₋ₓBₓ)₃(C_{1-y}D_{y})₅O₁₂ nanoparticles with (ii) said precursor of an oxide material, and in a second vessel mixing (iii) said further luminescent material or said precursor thereof with (ii) said precursor of an oxide material,
b2) at least partly curing at least one of said resultant mixtures,
b3) mixing said at least partly cured mixtures.

This results in even more distance between the domains.

### Step (c) curing said precursor of said oxide material to obtain a cured particle, said cured particle comprising said luminescent material, and a coating of said oxide material

Step c) comprises curing said precursor of said oxide material to obtain a cured particle, said cured particle comprising (i) said luminescent material comprising (A₁₋ₓBₓ)₃(C_{1-y}D_{y})₅O₁₂ nanoparticles or said precursor material for (A₁₋ₓBₓ)₃(C_{1-y}D_{y})₅O₁₂ nanoparticles, and a coating of said oxide material.

Such curing can for example be performed by a condensation or hydrolysis reaction. Preferably, said curing is a hydrolysis reaction. More preferably, said curing is performed by addition of ammonia solution.

Preferably, said curing is performed in a slow manner, and/or during agitation. This prevents clumping together of the particles. For example, ammonia solution may be added dropwise under constant stirring.

Preferably, the method further comprises drying the cured particles. More preferably, the method comprises drying the cured particles at a temperature of 80 °C to 125 °C.

Preferably, the method further comprising drying the cured particles at 80 to 125°C, and grinding the dried particles after curing step c), and/or grinding the particles after heating steps (d) or (e).

### Step (d) heating said cured particle at a first temperature for a first duration, wherein said first temperature is 800 °C or higher, wherein said first duration is 10 minutes or more

The cured particle is heated at a first temperature for a first duration. Heating precursor nanoparticles allows the luminescent material to form. Heating luminescent nanoparticles allows to remove crystal defects in the lattice, and to induce and/or promote crystallinity as well as remove any volatile/organic traces and impurities.

The first temperature is 600 °C or higher. Preferably, the first temperature is 800 °C or higher, more preferably 900 °C or higher. Preferably, the first temperature is 1500 °C or lower, more preferably 1250 °C or lower. Lower temperatures are not effective at removing crystalline defects. Higher temperatures are not practical, as the oxide material may melt or react and it requires high energy consumption.

The first duration is 10 minutes or more. Preferably, said first duration is 30 minutes or more, more preferably 1 hour or more. Preferably, said first duration is 8 hours or less, more preferably 5 hours or less, most preferably 3 hours or less. Short durations may not be effective at removing crystalline defects.

Higher temperatures allow for shorter heating durations, and longer durations allow for lower temperatures.

The heating said cured particle at a first temperature for a first duration is performed in an atmosphere. Preferably, the atmosphere is air or an inert gas. When the mixture is heated in air, no special measures need to be taken. The inert gas may be N₂ or Ar.

### (e) heating said cured particle under a reducing atmosphere comprising carbon monoxide at a second temperature for a second duration, wherein said second temperature is 500 °C or higher, and wherein said second duration is 1 hour or more

The cured particle is heated under a reducing atmosphere at a second temperature for a second duration. It has been found that this step allows to obtain luminescent nanoparticles showing excellent photoluminescent quantum yield and luminescence properties as well as improved stability.

The second temperature is 700 °C or higher. Preferably, said second temperature is 800 °C or higher, more preferably 1000 °C or higher. Preferably, said second temperature is 1400 °C or lower, more preferably 1200 °C or lower. Higher temperatures under reducing atmosphere may cause the luminescent material or the oxide coating to melt or react. Too low temperatures may not be effective.

The second duration is 1 hour or more. Preferably, said second duration is 8 hours or more, more preferably 16 hours or more, even more preferably 24 hours or more. Preferably, said second duration is 40 hours or less, more preferably 30 hours or less. It may be more practical to split the duration of the heating step in multiple sections. For example, the second duration may be a total of 26 hours, with the cured particle being heated for 10 hours, allowed to cool down, heated for 8 hours, allowed to cool down, and heated for a further 8 hours. Splitting the duration of the second heating step in multiple sections may also be required, if the carbon source in a double crucible set up is depleted before the total second duration is achieved.

Higher temperatures allow for shorter heating durations, and longer durations allow for lower temperatures.

The reducing atmosphere comprises carbon monoxide.

Heating under a reducing atmosphere comprising carbon monoxide may be performed using any method known to the skilled person. Preferably, heating under a reducing atmosphere comprising carbon monoxide is performed by having the coated sample/mixture in a first crucible, said first crucible being contained in a closed second crucible, said second crucible further containing a carbon source. This is also known as a "double crucible method". When the double crucible is heated, the carbon partially oxidizes to carbon monoxide.

### At least partially removing said oxide material

In a preferred embodiment, the method further comprises at least partially removing said oxide material. At least partially removing the oxide material reduces the size of the cured particles, making them more suitable for mixing. Said at least partially removing said oxide material is preferably performed by milling or etching, wherein said etching preferably is NaOH, NaF or HF etching, more preferably NaOH.

At least partially removing the oxide material allows to obtain more discrete particles and smaller particle size. This allows for improved mixing.

In an embodiment, the step of at least partially removing said oxide material is performed after the step of (d) heating the cured particle at a first temperature for a first duration, and before the step of (e) heating said cured particle under a reducing atmosphere at a second temperature for a second duration.

In another embodiment, the step of at least partially removing said oxide material is performed after the step of (e) heating said cured particle under a reducing atmosphere comprising carbon monoxide at a second temperature for a second duration.

Preferably, after said at least partially removing said oxide material, the particle is heated under a reducing atmosphere at a third temperature for a third duration, wherein said third temperature is 500 °C or higher, and wherein said third duration is 1 hour or more. The reducing atmosphere is an atmospheric condition in which oxidation is prevented and containing actively reducing gases such as hydrogen and carbon monoxide. Preferably, said reducing atmosphere comprises carbon monoxide. Preferably, said third temperature is 700 °C or higher, more preferably 800 °C or higher, even more preferably 1000 °C or higher. Preferably, said third temperature is 1400 °C or lower, more preferably 1200 °C or lower. Preferably, said third duration is 8 hours or more, more preferably 16 hours or more, even more preferably 24 hours or more. Preferably, said third duration is 40 hours or less, more preferably 30 hours or less. It may be more practical to split the duration of the heating step in multiple sections. For example, the third duration may be a total of 26 hours, with the cured particle being heated for 10 hours, allowed to cool down, heated for 8 hours, allowed to cool down, and heated for a further 8 hours. Splitting the duration of the third heating step in multiple sections may also be required, if the carbon source in a double crucible set up is depleted before the total third duration is achieved.

Heating under a reducing atmosphere after at least partially removing said oxide material improves the quantum yield, which may be negatively affected by the (partial) removal step.

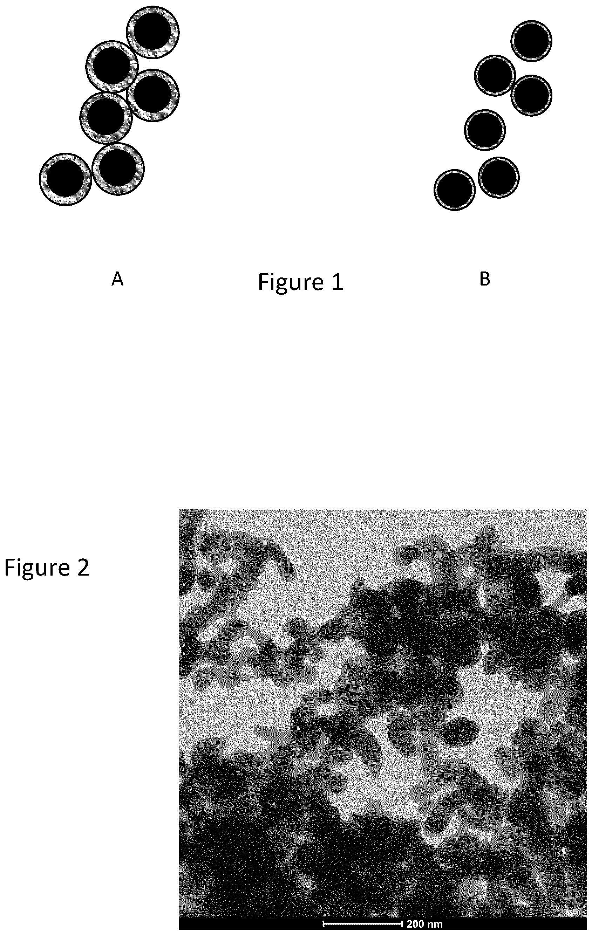

Figure 1 B illustrates particles after said oxide material is at least partially removed.

### Composite luminescent particle

There is provided a composite luminescent particle obtained via the method of the invention, comprising (i) (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; C comprises one or more of aluminum, gallium, and scandium; D comprises one or more transition metal ions; and 0≤x≤1, 0≤y≤1, and x+y>0, and (ii) a coating of an oxide material having a melting point of 850°C or higher.

The composite luminescent particle further can be characterized by the following features:
- a photoluminescence quantum yield of more than 60%, preferably more than 80%,
- a storage photostability such that the photoluminescence intensity after two weeks of storage in a non-inert atmosphere is at least 80% of the initial photoluminescence intensity, and
- a photostability such that at least 50% of the initial photoluminescence intensity remains after 10 hours, preferably at least 50% of the initial photoluminescence intensity after 15 hours under > 0.1 W/cm² illumination.

The composite luminescent particle comprises (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; C comprises one or more of aluminum, gallium, and scandium; D comprises one or more transition metal ions; and 0≤x≤1, 0≤y≤1, and x+y>0.

Preferably, A comprises at least one selected from the group of yttrium, lutetium, gadolinium, and lanthanum, and B comprises at least one of cerium, terbium and europium. More preferably, C is aluminum and B is cerium, europium, terbium or a combination of terbium and europium.

Doping concentrations are dependent on the type of ion. Preferably, when B comprises cerium, the molar concentration of cerium on the combined total of A and B is 0.05-5%. Preferably, when B comprises europium, the molar concentration of europium on the combined total of A and B is 0.1-20%. Preferably, when B comprises terbium, the molar concentration of terbium on the combined total of A and B is 20-100%. Combinations of the preferred doping ranges are possible as well, for example when B comprises both terbium and europium.

The (A₁₋ₓBₓ)₃(C_{1-y}D_{y})₅O₁₂ nanoparticles within the composite luminescent particle form domains having dimensions. The D₅₀ value of the longest diameter of said domains is preferably ≥ 0.5 nm and ≤ 100 nm, more preferably ≥ 0.5 nm and ≤ 50 nm, most preferably ≥ 0.5 nm and ≤ 20 nm, as measured using transmission electron microscopy (TEM). Preferably, the D₅₀ value of the domains is ≥ 0.5 nm and ≤ 100 nm. For discrete domains, the D₅₀ value of the domains is more preferably ≥ 0.5 nm and ≤ 50 nm, most preferably >_ 0.5 nm and < 20 nm. For networked domains, the BET surface area is more preferably >_ 10 m²/g, more preferably ≥ 15 m²/g. Domains of such sizes are suited to FRET. Such small domains are desirable, as they have a high surface area. The oxide material forms a stable matrix around said domains, thus preventing ion exchange or quenching. Additionally, the oxide material keeps the domains in place, such that the inter-domain distance stays the same, regardless of post-treatment.

The composite luminescent particle further comprises a coating of an oxide material having a melting point of 850°C or higher. The oxide material forms a coating around said first luminescent material and said second luminescent material. This protects the luminescent materials from deterioration from, for example, moisture or heat.

Said oxide material has a melting point of 850°C or higher. Preferably, the melting point is 1000 °C or higher, more preferably 1200 °C or higher. The high melting point allows to process the composite luminescent particles, for example by annealing the luminescent materials, without the composite luminescent particles melting or clumping together. The melting point of the oxide material is therefore preferably higher than the annealing temperature.

Preferably, said oxide material is selected from the group of silicon oxides, aluminium oxides, or phosphates. More preferably, said oxide material is selected from the group of silica, alumina, magnesium oxide, and phosphates. These materials are physically, chemically and thermally stable. Preferably, said second material is silica, as this material exhibits good stability. Silica also can be readily dispersed in water and other hydrophilic solvents, thus making the composite luminescent particles suitable for various applications. The oxide material may be doped with luminescent ions in a certain embodiment.

The composite luminescent particle has improved properties.

The composite luminescent particle has a photoluminescence quantum yield of more than 60%, preferably more than 80%. The photoluminescence quantum yield is determined using an integrating sphere method, where the absorption and emission photons by the sample are measured with respect to a reference. The quantum yield is then determined as the ratio of the amount of emitted photons over the absorbed photons by the sample is.

When Ce is used as dopant, the luminescent nanoparticle material excitation spectrum of Ce in the garnet preferably has a peak ratio of the intensities measured at 455 nm and 380 nm (455:380) of more than 20. This is different from cerium doped aluminum garnet nanoparticles that have not been treated at a high temperature, where the excitation probability at 380 nm is much stronger than in annealed or bulk cerium aluminum garnets, and wherein consequently the peak ratio is much lower than 20.

The composite luminescent particle has improved storage stability. The storage photostability is such that the photoluminescence intensity after two weeks of storage in a non-inert atmosphere is at least 80% of the initial photoluminescence intensity. Many luminescent nanoparticle materials have poor storage photostability.

The composite luminescent particle has improved photostability. The photostability under illumination is such that at least 50% of the initial photoluminescence intensity remains after 10 hours, preferably at least 50% of the initial photoluminescence intensity after 15 hours. Illumination is performed with a light intensity of at least 0.1 W/cm² at a suitable excitation wavelength. A suitable excitation wavelength means any wavelength that can be used to efficiently excite the luminescent material.

The photostability is preferably such that compared to composite luminescent particles that have not undergone the heating steps, the photostability is at least 1.5 times as high, preferably at least twice as high. For example, if the photostability under illumination of un-heated composite luminescent particles is such that at least 30% of the initial photoluminescence intensity remains after 10 hours, the photostability under illumination of the heated composite luminescent particles is at least 45%. Illumination is performed with a light intensity of at least 0.1 W/cm² at a suitable excitation wavelength. Illumination is performed at a wavelength that excites the composite luminescent particles. For example, when the composite luminescent particles comprise Cerium, the illumination is performed at 450 nm.

Due to the high initial photoluminescence quantum yield, the photostability under illumination may be lower than in materials having a lower initial photoluminescence quantum yield, while the final photoluminescence quantum yield remains higher than in such materials. Thus, the composite luminescent particle preferably has a photostability under illumination such that after 10 hours, the photoluminescence quantum yield is higher than 35%, preferably higher than 40%. Illumination is performed with a light intensity of at least 0.1 W/cm² at a suitable excitation wavelength.

Preferably, the D₅₀ value of the longest diameter of the composite luminescent particle is ≥ 1 nm and ≤ 50 µm, as measured using transmission electron microscopy. More preferably, said D₅₀ value is > 20 nm and ≤ 10 µm, most preferably ≥ 50 nm and ≤ 10 µm, as measured using transmission electron microscopy (TEM). Smaller particle dimensions allow for interparticle FRET, as well as smaller distances between luminescent materials due to thinner oxide material coating. Smaller particles also have a higher surface area, which may be desirable.

In an aspect of the invention, the composite luminescent particle comprises a further luminescent material. The further luminescent material comprises a rare-earth, s2-configuration ion or transition metal doped phosphor material.

Preferably, the further luminescent material is doped with the trivalent ion of at least one of cerium, europium, or terbium. These ions are capable of emitting in the visible spectrum upon suitable excitation, thus making them attractive for lighting.

Preferably, said further luminescent material is selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these. These materials form a lattice into which the rare-earth metal ions can be doped.

More preferably, said further luminescent material is selected from the group of oxides, garnets, phosphates, vanadates, or a combination thereof. Even more preferably, said luminescent material is selected from the group consisting of Y₃Al₅O₁₂, Lu₃Al₅O₁₂, Y₂O₃, YVPO₄, YVO₄, or LaPO₄, or a combination thereof. These luminescent materials have been found to exhibit desirable optical characteristics.

The further luminescent material also forms domains within the composite luminescent particle. The D₅₀ value of the smallest dimension of said domains is preferably ≥ 0.5 nm and ≤ 100 nm, more preferably ≥ 0.5 nm and ≤ 50 nm, most preferably ≥ 0.5 nm and ≤ 20 nm, as measured using transmission electron microscopy (TEM). Preferably, the D₅₀ value of the domains is ≥ 0.5 nm and ≤ 100 nm, more preferably ≥ 0.5 nm and ≤ 50 nm, most preferably ≥ 0.5 nm and ≤ 20 nm. The domain size thus does not include the oxide material coating. Domains of such sizes are suited to FRET. Such small domains are desirable, as they have a high surface area.

### Luminescent particle obtainable by method comprising at least partially removing said oxide material

There is further provided a luminescent particle obtainable by the method comprising at least partially removing said oxide material.

The luminescent particle comprises (i) at least one (A₁₋ₓBₓ)₃(C_{1-y}D_{y})₅O₁₂ nanoparticle, wherein A comprises one or more of yttrium, lutetium, gadolinium, lanthanum; B comprises one or more rare earth elements, C comprises one or more of aluminum, gallium, and scandium, D comprises one or more transition metal ions, and 0≤x≤1, 0≤y≤1, and x+y>0.

The composite luminescent particle comprises (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; C comprises one or more of aluminum, gallium, and scandium; D comprises one or more transition metal ions; and 0≤x≤1, 0≤y≤1, and x+y>0.

Preferably, A comprises at least one selected from the group of yttrium, lutetium, gadolinium, and lanthanum, and B comprises at least one of cerium, terbium and europium. More preferably, C is aluminum and B is cerium, europium, terbium or a combination of terbium and europium.

Doping concentrations are dependent on the type of ion. Preferably, when B comprises cerium, the molar concentration of cerium on the combined total of A and B is 0.05-5%. Preferably, when B comprises europium, the molar concentration of europium on the combined total of A and B is 0.1-20%. Preferably, when B comprises terbium, the molar concentration of terbium on the combined total of A and B is 20-100%. Combinations of the preferred doping ranges are possible as well, for example when B comprises both terbium and europium.

The luminescent particle has a D₅₀ value. Preferably, the D₅₀ value of the longest diameter is ≥ 0.5 nm and ≤ 100 nm, more preferably ≥ 0.5 nm and ≤ 50 nm, most preferably ≥ 0.5 nm and ≤ 20 nm. For networked luminescent particles, the BET surface area is more preferably >_ 10 m²/g, more preferably >_ 15 m²/g. Domains of such sizes are suited to FRET. Such small domains are desirable, as they have a high surface area.

Preferably, the luminescent particle comprises (ii) a coating of an oxide material having a melting point of 850°C or higher, wherein said coating has a thickness of more than 0 nm and less than 5 nm. A coating of this thickness allows the luminescent particle to have the physical and chemical stability associated with the coating, while being smaller in size.

Said oxide material has a melting point of 850°C or higher. Preferably, the melting point is 1000 °C or higher, more preferably 1200 °C or higher. The high melting point allows to process the luminescent particles, for example by annealing the luminescent materials, without the luminescent particles melting or clumping together. The melting point of the oxide material is therefore preferably higher than the annealing temperature.

Preferably, said oxide material is selected from the group of silicon oxides, aluminium oxides, or phosphates. More preferably, said oxide material is selected from the group of silica, alumina, magnesium oxide, and phosphates. These materials are physically, chemically and thermally stable. Preferably, said second material is silica, as this material exhibits good stability. Silica also can be readily dispersed in water and other hydrophilic solvents, thus making the composite luminescent particles suitable for various applications. The oxide material may be doped with luminescent ions in a certain embodiment.

Preferably, said luminescent particle can be characterized by the following features:
- a photoluminescence quantum yield of more than 60%, preferably more than 80%;
- a storage photostability such that the photoluminescence intensity after two weeks of storage in a non-inert atmosphere is at least 80% of the initial photoluminescence intensity; and
- a photostability under illumination such that at least 50% of the initial photoluminescence intensity remains after 10 hours, preferably at least 50% of the initial photoluminescence intensity after 15 hours, under > 0.1 W/cm² illumination at a suitable excitation wavelength.

These improved properties are the same as for the composite luminescent particle.

### Luminescent composition

The invention provides a luminescent composition. The luminescent composition comprises a first luminescent material and a second luminescent material, wherein at least one of the first luminescent material and the second luminescent material comprises the composite luminescent particle according to the invention.

Preferably, the first luminescent material is capable of emitting light in a first wavelength range, and said second luminescent material is capable of absorbing light in a second wavelength range, and has an emission spectrum which overlaps at least partly with one or more of the excitation bands of said first luminescent material.

More preferably, the first luminescent material and the second luminescent material so arranged to each other to allow non-radiative energy transfer from the second luminescent material to the first luminescent material.

In an embodiment, the luminescent composition comprises the first luminescent material as a particle coated with the oxide material, and the second luminescent material as a particle coated with the oxide material. Due to the oxide material coating the first luminescent material and the second luminescent material, the luminescent particles are allowed to mix better and said luminescent composition is more homogenous. Such a composition is shown in in Figure 1 'c'.

In an embodiment, only one of said first luminescent material or said second luminescent material is comprised in a particle coated with the oxide material. In this case, preferably the D₅₀ value of the smallest dimension of the other luminescent material is preferably ≥ 0.5 nm and ≤ 100 nm, more preferably ≥ 0.5 nm and ≤ 50 nm, most preferably ≥ 0.5 nm and ≤ 20 nm, as measured using transmission electron microscopy (TEM). Preferably, the D₅₀ value of the other luminescent material is ≥ 0.5 nm and ≤ 100 nm, more preferably ≥ 0.5 nm and ≤ 50 nm, most preferably ≥ 0.5 nm and ≤ 20 nm. In another embodiment, the other luminescent material is provided as a bulk material with the coated particles provided on the bulk luminescent material. In this context the term "bulk" especially means and/or includes greater than nanoscale, for example greater than 100 nm in diameter and including micro-size scales.

In an embodiment, both the first luminescent material and the second luminescent material is comprised within the composite particle of the invention.

### First luminescent material and second luminescent material

Preferably, the first luminescent material is capable of emitting light in a first wavelength range, and the second luminescent material is capable of absorbing light in a second wavelength range, and has an emission spectrum which overlaps at least partly with one or more of the excitation bands of said first luminescent material. For all embodiments where this is the case, the following apply.

The first luminescent material may be capable of emitting light in a first wavelength range. The skilled person will understand that the first luminescent material functions as an emitting material in the luminescent composition according to the invention. The first wavelength range may be any wavelength range of interest. Preferred wavelength ranges will be described hereinafter.

The second luminescent material may be capable of absorbing light in a second wavelength range. The skilled person will understand that the second luminescent material functions as a sensitizer material in the luminescent composition according to the invention. The second wavelength range may be any wavelength range of interest. Preferred wavelength ranges will be described hereinafter.

The second luminescent material has, when excited by light in the second wavelength range, an emission spectrum which overlaps at least partly with one or more excitation bands of said first luminescent material. The skilled person is well able to determine the overlap of the spectra based on spectra known in the art or by determining the spectra by routine experimentation, which is for example disclosed in WO2020/053429.

Preferably, the overlap of said emission spectrum of said second material and one or more excitation bands of said first material is in the blue (440 to 510 nm), green (510 to 560 nm) or yellow (560 to 580 nm) wavelength range.

Preferably, said first luminescent material and said second luminescent material are so arranged to each other to allow non-radiative energy transfer (sometimes also referred to as Fluorescent Resonance Energy Transfer, FRET) from said second luminescent material (sensitizer material) to said first luminescent material (emitter material). Generally, this comprises close proximity between the first and second luminescent materials, for instance from about 0.5 nm to about 20 nm in distance. The skilled person is well aware how non-radiative energy transfer may be achieved. This is, for instance, described in WO2018/167266, the contents of which are herewith incorporated by reference. The skilled person will understand that non-radiative energy transfer involves non-radiative transfer of energy from an excited sensitizer material to an acceptor (or emitter) ion in the emitting material. It is evidenced by increased selective excitation of the sensitizer material resulting in increased emission from an emitter ion in the emitting material. The non-radiative energy transfer of interest may originate from either Förster- or Dexter-type energy transfer. The skilled person will realize that - since resonant energy transfer is in first order inversely proportional to inter-ion distance at the power of 6 (in case of Förster-type energy transfer), or exponentially proportional to the distance (in case of Dexter-type energy transfer) - the arrangement to allow non-radiative energy transfer may be effected by proper engineering of the effective distances between the sensitizer material and the emitter ions in the emitting material.

The skilled person will understand that the first and second material have to be in close proximity for FRET to occur.

### First luminescent material

The first luminescent material is capable of emitting light in a first wavelength range. The first wavelength range may be any wavelength range of interest.

Preferably, the first luminescent material comprises a red or green emitting material. As used herein the term red emitting material refers to a material which, upon suitable excitation, has one or more emission bands between 600 nm and 700 nm and the term green emitting material refers to a material which, upon suitable excitation, has one or more emission bands between 510 and 560 nm. Providing a red or green emitting material can be desirable for color rendering purposes. According to alternative aspects of the invention, the first luminescent material is a material having, upon suitable excitation, one or more emission bands between 700 and 1400 nm (IR-A), between 580 and 600 nm (amber and/or orange), between 560 and 580 nm (yellow), between 480 and 510 nm (cyan), between 440 and 480 nm (blue), between 400-440 nm (violet), between 315-400 nm (UV-A), and/or between 280-315 nm (UV-B).

The first luminescent material preferably comprises a rare-earth, s2-configuration ion or transition metal doped phosphor material. The phosphor materials may be divalent or trivalent rare-earth doped phosphors. Examples of suitable rare-earth doped phosphor materials include, but are not limited to: LaPO₄:Eu³⁺ (and/or Tb³⁺), CaAlSiN₃:Eu²⁺, Y₂O₃:Eu³⁺ (and/or Tb³⁺), Y(V,P)O₄:Eu³⁺ (and/or Tb³⁺), Lu₃Al₅O₁₂:Ce³⁺ (or Eu³⁺ and/or Tb³⁺), Y₃AlₛO₁₂:Ce³⁺ (or Eu³⁺ and/or Tb³⁺), and combinations thereof, examples of suitable transition metal doped phosphors are BaMgAl₁₄O₂₃:Mn²⁺, Mg(Al,Ga)₂O₄:Mn²⁺, Zn₂SiO₄:Mn²⁺, K₂SiF₆:Mn⁴⁺, MgF₂.GeO₂:Mn⁴⁺, and combinations thereof.

As discussed, the first luminescent material may comprise the composite luminescent particles according to the invention.

Phosphor materials may be procured today on the open market, or may be synthesized, for example as described in [Riwotzki, K.; Meyssamy, H.; Kornowski, A.; Haase, M. J. Phys. Chem. B. 2000, 104, 2824-2828].

As is known to the skilled person, rare-earth, s2-configuration ion or transition metal doped phosphor materials comprise a host lattice doped with optically active ions.

The first luminescent material may have any suitable host lattice. The host lattice may for instance be selected from the group consisting of oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these or another inorganic host material in which the optically active ions can be incorporated.

Preferably, the host lattice of the first luminescent material is an oxide, phosphate, vanadate or a combination thereof, more preferably selected from the group consisting of Y₃Al₅O₁₂ ("YAG"), Lu₃Al₅O₁₂ ("LuAG"), Y₂O₃, YVPO₄, YVO₄ or LaPO₄ or a combination thereof. Preferably, said preferred host lattice of the first luminescent material is doped with one or more ions selected from the group consisting of Eu³⁺, Tb³⁺, Mn²⁺ and Mn⁴⁺. These ions provide good emission characteristics, such as emission bands that are strong and/or in the red or green part of the visible spectrum.

In case of Eu³⁺ doping, the first luminescent material may for example have a host lattice doped having a doping ratio of at least about 1%, more preferably having a doping ratio of between about 5% and about 80%. In case Tb³⁺ doping, the first luminescent material may for example have a host lattice doped having a doping ratio of at least about 10%, more preferably between about 30% and about 80% Tb³⁺. In case of Mn⁴⁺ doping, the first luminescent material may for example have a host lattice doped having a doping ratio of about 0.1-30%, most preferably between about 1-10%. In case of Mn²⁺ doping, the first luminescent material may for example have a host lattice doped having a doping ratio of about 0.1-30%, most preferably between about 1-10%.

In an exemplary embodiment, the first luminescent material is selected from the group consisting of (Ca,Sr)Ga₂O₆:Eu³⁺ (or Tb³⁺), (Ca,Sr,Ba)La₂Bi₂(SiO₄)₃O:Eu³⁺ (or Tb³⁺), (Ca,Sr,Ba)SnO₃:Eu³⁺ (and/or Tb³⁺), (Ca,Y,Gd)MoO₄:Eu³⁺ (or Tb³⁺), (Y,Gd)BO₃ (pseudo-vaterite) :Eu³⁺ (or Tb³⁺), (Y,Tb)SiO₅:Eu³⁺ (or Tb³⁺), A-La₂O₃:Eu³⁺ (or Tb³⁺), Ba₂(SiO₄):O²:Eu³⁺ (or Tb³⁺), Ba₂MgSi₂O₇:Eu³⁺ (or Tb³⁺), Ba₂Y(BO₃)₂Cl:Eu³⁺ (or Tb³⁺), Ba₃(PO₄)₂:Eu³⁺ (or Tb³⁺), Ba₃Ca₃(PO₄)₄:Eu³⁺ (or Tb³⁺), Ba₃Gd(BO₃)₃:Eu³⁺ (or Tb³⁺), Ba₃Gd₂(BO₃)₄:Eu³⁺ (or Tb³⁺), Ba₃La₂(BO₃)₄:Eu³⁺ (or Tb³⁺), Ba₃V₂O₈:Eu³⁺ (or Tb³⁺), Ba₃Y₂(BO₃)₄:Eu³⁺ (or Tb³⁺), BaB₈O₁₃:Eu³⁺ (or Tb³⁺), BaBPO₅:Eu³⁺ (or Tb³⁺), BaFCl:Eu³⁺ (or Tb³⁺), BaGd₂O₄:Eu³⁺ (or Tb³⁺), BaGd₄Si₅O₁₇:Sm:Eu³⁺ (or Tb³⁺), BaGdB₉O₁₆:Eu³⁺ (or Tb³⁺), BaLaB₉O₁₆:Eu³⁺ (or Tb³⁺), BaSO₄:Eu³⁺ (or Tb³⁺), BaY₂F₈:Yb:Eu³⁺ (or Tb³⁺), BaY₂Si₃O₁₀:Eu³⁺ (or Tb³⁺), BaYB₉O₁₆:Eu³⁺ (or Tb³⁺), BaZr(BO₃)₂:Eu³⁺ (or Tb³⁺), BaZrO₃:Eu³⁺ (or Tb³⁺), BaZrO₃:Eu³⁺ (or Tb³⁺), b-BaB₂O₄:Eu³⁺ (or Tb³⁺), B-Gd₂O₃:Eu³⁺ (or Tb³⁺), Ca₂Al(AlSiO₇) :Eu³⁺ (or Tb³⁺), Ca₂Gd₂(GeO₄)₂O:Eu³⁺ (or Tb³⁺), Ca₂Gd₈(SiO₄)₆O₂:Eu³⁺ (or Tb³⁺), Ca₂Gd₈Si₆O₂₆:Eu³⁺ (or Tb³⁺), Ca₂La₈(SiO₄)₆O₂:Eu³⁺ (or Tb³⁺), Ca₃(BO₃)₂:Eu³⁺ (or Tb³⁺), Ca₃Al₂O₆:Eu³⁺ (or Tb³⁺), Ca₃Gd₂(BO₃)₄:Eu³⁺ (or Tb³⁺), Ca₃La₂(BO₃)₄:Eu³⁺ (or Tb³⁺), Ca₃Y₂(BO₃)₄:Eu³⁺ (or Tb³⁺), Ca₄GdO(BO₃)₃:Eu³⁺ (or Tb³⁺), Ca₅(PO₁₁)₃F:Eu³⁺ (or Tb³⁺), Ca₅(PO₄)₃Br:Eu³⁺ (or Tb³⁺), Ca₅(PO₄)₃F:(4f-site) :Eu³⁺ (or Tb³⁺), Ca₅(PO₄)₃F:(6h-site) :Eu³⁺ (or Tb³⁺), Ca₅(PO₄)₃OH:Eu³⁺ (or Tb³⁺), CaBPO₅:Eu³⁺ (or Tb³⁺), CaF₂:Eu³⁺ (or Tb³⁺), CaLaB₇O₁₃:Eu³⁺ (or Tb³⁺), calcite-CaCO₃:Eu³⁺ (or Tb³⁺), CaO:Eu³⁺ (or Tb³⁺), CaSO₄:Eu³⁺ (or Tb³⁺), CaYO(BO₃):Eu³⁺ (or Tb³⁺), C-Gd₂O₃:Eu³⁺ (or Tb³⁺), C-Lu₂O₃:(C2) :Eu³⁺ (or Tb³⁺), C-Lu₂O₃:(C3i):Eu³⁺ (or Tb³⁺), Cs₂NaYF₆:Tm:Eu³⁺ (or Tb³⁺), Cs₃Ge₃O₉:Eu³⁺, C-Sc₂O₃:Yb:Eu³⁺ (or Tb³⁺), C-Y₂O₃:Eu³⁺ (or Tb³⁺), Eu³⁺ (or Tb³⁺)[(ttfa)3(phen)]0:Eu³⁺ (or Tb³⁺), Gd_{17.33}(BO₃)₄(B₂O₅)₂O₁₆:Eu³⁺ (or Tb³⁺), Gd₂BaZnO₅:Eu³⁺ (or Tb³⁺), Gd₂O₂(SO₄) :Eu³⁺ (or Tb³⁺), Gd₂P₄O₁₃:Eu³⁺ (or Tb³⁺), Gd₃O₄Br:Eu³⁺ (or Tb³⁺), Gd₃PO₇:Eu³⁺ (or Tb³⁺), Gd₃Te₂Li₃O₁₂:Eu³⁺ (or Tb³⁺), Gd₈P₂O₁₇:Eu³⁺ (or Tb³⁺), GdAₗ₃ (BO₃)₄:Eu³⁺ (or Tb³⁺), GdAlO₃:Eu³⁺ (or Tb³⁺), GdAlO₃:Eu³⁺ (or Tb³⁺), GdB₃O₆:Eu³⁺ (or Tb³⁺), GdBO₃:Eu³⁺ (or Tb³⁺), GdGaO₃:Eu³⁺ (or Tb³⁺), GdOBr:Eu³⁺ (or Tb³⁺), GdOCl:Eu³⁺ (or Tb³⁺), GdP₃O₉:Eu³⁺ (or Tb³⁺), GdPO₄:Eu³⁺ (or Tb³⁺), I-CaB₂O₄:Eu³⁺ (or Tb³⁺), InBO₃:Eu³⁺ (or Tb³⁺), I-SrB₂O₄:Eu³⁺ (or Tb³⁺), KCaGd(PO₄)₂:Eu³⁺ (or Tb³⁺), La₂₆O₂₇(BO₃)₈:Eu³⁺ (or Tb³⁺), La₂BaZnO₅:Eu³⁺ (or Tb³⁺), La₂Hf₂O₇:Eu³⁺ (or Tb³⁺), La₂O₂(SO₄):Eu³⁺ (or Tb³⁺), La₂O₂S:Eu³⁺ (or Tb³⁺), La₂W₃O₁₂:Eu³⁺ (or Tb³⁺), La₂Zr₃(MoO₄)₉:Eu³⁺ (or Tb³⁺), La₃TaO₄Cl₆:Eu³⁺ (or Tb³⁺), La₃WO₆Cl₃:Eu³⁺ (orTb³⁺), LaAlO₃:Eu³⁺ (orTb³⁺), LaB₃O₆:Eu³⁺ (orTb³⁺), LaBO₃:Eu³⁺ (orTb³⁺), LaF₃:Eu³⁺ (or Tb³⁺), LaGaO₃:Eu³⁺ (or Tb³⁺), LaMgB₅O₁₀:Eu³⁺ (or Tb³⁺), LaOBr:Eu³⁺ (or Tb³⁺), LaOCl:Eu³⁺ (or Tb³⁺), LaOF:Eu³⁺ (or Tb³⁺), LaOl:Eu³⁺ (orTb³⁺), LaP₃O₉:Eu³⁺ (orTb³⁺), LaPO₄:Eu³⁺ (orTb³⁺), LaYO₃:Eu³⁺ (orTb³⁺), Li₂Lu₅O₄(BO₃)₃:Eu³⁺ (or Tb³⁺), Li₃Ba₂La₃(MoO₄)₈:Eu³⁺ (or Tb³⁺), Li₃La₂(BO₃)₃:Eu³⁺ (or Tb³⁺), Li₆Gd(BO₃)₃:Eu³⁺ (or Tb³⁺), Li₆Y(BO₃)₃:Eu³⁺ (or Tb³⁺), LiCaAlF₆:Eu³⁺ (or Tb³⁺), LiEu³⁺ (or Tb³⁺), Mo₂O₈:Eu³⁺ (or Tb³⁺), LiGd₆O₅(BO₃)₃:Eu³⁺ (or Tb³⁺), LiGdF₄:Eu³⁺ (or Tb³⁺), LiGdGeO₄:Eu³⁺ (or Tb³⁺), LiGdO₂:Eu³⁺ (or Tb³⁺), LiGdSiO₄:Eu³⁺ (or Tb³⁺), LiLa₂O₂BO₃:Eu³⁺ (or Tb³⁺), LiLaGeO₄:Eu³⁺ (or Tb³⁺), LiLaO₂:Eu³⁺ (or Tb³⁺), LiLaP₄O₁₂:Eu³⁺ (or Tb³⁺), LiLaSiO₄:Eu³⁺ (or Tb³⁺), LiLuGeO₄:Eu³⁺ (or Tb³⁺), LiLuO₂:Eu³⁺ (or Tb³⁺), LiLuSiO₄:Eu³⁺ (or Tb³⁺), LiScO₂:Eu³⁺ (or Tb³⁺), LiSr₂YO₄:Eu³⁺ (or Tb³⁺), LiSrAlF₆:Eu³⁺ (or Tb³⁺), LiY₆O₅(BO₃)₃:Eu³⁺ (or Tb³⁺), LiYF₄:Eu³⁺ (or Tb³⁺), LiYGeO₄:Eu³⁺ (or Tb³⁺), LiYO₂:Eu³⁺ (or Tb³⁺), LiYSiO₄:Eu³⁺ (or Tb³⁺), Lu₂O₂(SO₄):Eu³⁺ (or Tb³⁺), Lu₂Si₂O₇:Eu³⁺ (or Tb³⁺), Lu₃Al₅O₁₂:Eu³⁺ (or Tb³⁺), Lu₃Al₅O₁₂:Yb:Eu³⁺ (or Tb³⁺), LuBO₃:Eu³⁺ (or Tb³⁺), LuBO₃ (calcite):Eu³⁺ (or Tb³⁺), LuOCl:Eu³⁺ (or Tb³⁺), LuPO₄:Eu³⁺ (or Tb³⁺), Mg₂Gd₈(SiO₄)₆O₂:Eu³⁺ (or Tb³⁺), Mg₂La₈(SiO₄)₆O₂:Eu³⁺ (or Tb³⁺), MgO:Eu³⁺ (or Tb³⁺), MgSiO₃:Eu³⁺ (or Tb³⁺), Na₃YSi₃O₉:Eu³⁺ (or Tb³⁺), Na₆Gd(BO₃)₃:Eu³⁺ (or Tb³⁺), NaGdGeO₄:Eu³⁺ (or Tb³⁺), NaGdO₂:Eu³⁺ (or Tb³⁺), NaGdSiO₄:Eu³⁺ (or Tb³⁺), NaLaGeO₄:Eu³⁺ (or Tb³⁺), NaLaO₂:Eu³⁺ (or Tb³⁺), NaLaSiO₄:Eu³⁺ (or Tb³⁺), NaLuGeO₄:Eu³⁺ (or Tb³⁺), NaLuSiO₄:Eu³⁺ (or Tb³⁺), NaScO₂:Eu³⁺ (or Tb³⁺), NaSrLa(VO₄)₂:Eu³⁺ (or Tb³⁺), NaYGeO₄:Eu³⁺ (or Tb³⁺), NaYSiO₄:Eu³⁺ (or Tb³⁺), ScBO₃:Eu³⁺ (or Tb³⁺), ScOCl:Eu³⁺ (or Tb³⁺), ScPO₄:Eu³⁺ (or Tb³⁺), Sr₂B₂O₅:Eu³⁺ (or Tb³⁺), Sr₂Gd₈(SiO₄)₆O₂:Eu³⁺ (or Tb³⁺), Sr₂La₂Zn₂O₇:Eu³⁺ (or Tb³⁺), Sr₂La₂Zn₂O₇:Eu³⁺ (or Tb³⁺), Sr₂LaAlO₅:Eu³⁺ (or Tb³⁺), Sr₃(BO₃)₂:Eu³⁺ (or Tb³⁺), Sr₃(PO₄)₂:Eu³⁺ (or Tb³⁺), Sr₃(PO₄)₂:Sm:Eu³⁺ (or Tb³⁺), Sr₃Gd₂(BO₃)₄:Eu³⁺ (or Tb³⁺), Sr₃La₂(BO₃)₄:Eu³⁺ (or Tb³⁺), Sr₃La₆(SiO₄)₆:Eu³⁺ (or Tb³⁺), Sr₃Y₂(BO₃)₄:Eu³⁺ (or Tb³⁺), Sr₅(PO₄)₃F:Eu³⁺ (or Tb³⁺), Sr₉Ln(VO₄)₇:Eu³⁺ (or Tb³⁺), SrAl₂B₂O₇:Eu³⁺ (or Tb³⁺), SrB₄O₇:Eu³⁺ (or Tb³⁺), SrB₆O₁₀:Eu³⁺ (or Tb³⁺), SrCO₃:Eu³⁺ (or Tb³⁺), SrGdAlO₄:Eu³⁺ (or Tb³⁺), SrHfO₃:Tm:Eu³⁺ (or Tb³⁺), SrLa₂BeO₅:(4c):Eu³⁺ (or Tb³⁺), SrLa₂BeO₅:(8d):Eu³⁺ (or Tb³⁺), SrLaAlO₄:Eu³⁺ (or Tb³⁺), SrLaGa₃O₇:Eu³⁺ (or Tb³⁺), SrLaO(BO₃):Eu³⁺ (or Tb³⁺), SrO:Eu³⁺ (or Tb³⁺), SrY₂O₄:(Sr-site):Eu³⁺ (or Tb³⁺), SrY₂O₄:(Y-sitel):Eu³⁺ (or Tb³⁺), SrY₂O₄:(Y-site2):Eu³⁺ (or Tb³⁺), Tb₂Mo₃O₁₂:Eu³⁺ (or Tb³⁺), Tb₂W₃O₁₂:Eu³⁺ (or Tb³⁺), TbBO₃:Eu³⁺ (or Tb³⁺), ThO₂:Eu³⁺ (or Tb³⁺), X1-Gd₂SiO₅:Eu³⁺ (or Tb³⁺), X1-Y₂SiO₅:Eu³⁺ (or Tb³⁺), X2-Y₂SiO₅:Eu³⁺ (or Tb³⁺), Y_{17.33}(BO₃)₄(B₂O₅)₂O₁₆:Eu³⁺ (or Tb³⁺), Y₂Ge₂O₇:Eu³⁺ (or Tb³⁺), Y₂GeO₅:Eu³⁺ (or Tb³⁺), Y₂O₂(SO₄):Eu³⁺ (or Tb³⁺), Y₂O₂S:Eu³⁺ (or Tb³⁺), Y₂O₂S:Eu³⁺ (or Tb³⁺), Y₂O₃:Eu³⁺ (or Tb³⁺), Y₂P₄O₁₃:Eu³⁺ (or Tb³⁺), Y₂Si₂O₇:Eu³⁺ (or Tb³⁺), Y₂SiO₅:Eu³⁺ (or Tb³⁺), Y₃Al₅O₁₂:Eu³⁺ (or Tb³⁺), Y₃O₄Br:Eu³⁺ (or Tb³⁺), Y₃O₄Cl:Eu³⁺ (orTb³⁺), Y₃PO₇:Eu³⁺ (orTb³⁺), Y₄GeO₈:Eu³⁺ (orTb³⁺), Y₈P₂O₁₇:Eu³⁺ (orTb³⁺), YA₃(BO₃)₄:Eu³⁺ (or Tb³⁺), YAlO₃:Eu³⁺ (or Tb³⁺), YBO₃:Eu³⁺ (or Tb³⁺), YbOBr:Yb:Eu³⁺ (or Tb³⁺), YF₃:Eu³⁺ (or Tb³⁺), YOBr:Eu³⁺ (or Tb³⁺), YOCl:Eu³⁺ (or Tb³⁺), YOCl:Eu³⁺ (or Tb³⁺), YOF:Eu³⁺ (or Tb³⁺), YOF:Eu³⁺ (or Tb³⁺), YP₃O₉:Eu³⁺ (or Tb³⁺), YPO₄:Eu³⁺ (or Tb³⁺), YTaO₄:Eu³⁺ (or Tb³⁺), YVO₄:Eu³⁺ (or Tb³⁺), ZrP₂O₇:Eu³⁺ (or Tb³⁺), Y₃Al₅O₁₂:Ce³⁺, Lu₃Al₅O₁₂:Ce³⁺ or mixtures thereof.

The skilled person will understand that the notation :Eu³⁺ (or :Tb³⁺ or :Ce³⁺ or :Mn²⁺ or :Mn⁴⁺) indicates that the host lattice is doped with Eu³⁺ (or with Tb³⁺, or with Ce³⁺ or with Mn²⁺ or with Mn⁴⁺).

### Second luminescent material

The second luminescent material preferably comprises the composite luminescent particles according to the invention, comprising (A₁₋ₓBₓ)₃(C_{1-y}D_{y})₅O₁₂ nanoparticles. In such compositions, B is preferably cerium and/or terbium.

As discussed, the first luminescent material may comprise the composite luminescent particles according to the invention. In compositions wherein the first luminescent material comprises the composite luminescent particles according to the invention, the second luminescent material is preferably as described below.

Any suitable inorganic luminescent material may be used as second luminescent material. The second material is capable of absorbing light in a second wavelength range. The second wavelength may be any wavelength range of interest.

Preferably, the second luminescent material has one or more excitation bands in the wavelength range between 300 to 580 nm, preferably wherein said second luminescent material has one or more excitation bands in the UV-A (315 to 400 nm), violet (400 to 440 nm), blue (440 to 490 nm) or green (510 to 560 nm) wavelength range, most preferably in the blue (440 to 490 nm) wavelength range. LEDs based on (Al,ln,Ga)N provide efficient "pump" light generation in the violet to blue wavelength range (about 400 nm to about 490 nm). Examples of blue-excitable materials are CaAISiN₃:Eu²⁺ and Y₃Al₅O₁₂:Ce³⁺.

In other aspects of the invention, the second luminescent material is a material having one or more excitation bands between 700 and 1400 nm (IR-A), between 580 and 600 nm (amber and/or orange), between 560 and 580 nm (yellow), between 510-560 nm (green), between 480 and 510 nm (cyan), between 440 and 480 nm (blue), between 400-440 nm (violet), between 315-400 nm (UV-A), and/or between 280-315 nm (UV-B).

In another preferred embodiment, the host lattice of the second luminescent material is a garnet, fluoride, silicate, phosphate or nitride, more preferably selected from the group consisting of Y₃Al₅O₁₂ ("YAG"), Lu₃Al₅O₁₂ ("LuAG"), LaPO₄, MgF₂, CaF₂, Sr₂SiO₄, Ba₂SiO₄, Ca₂MgSi₂O₇, LiSrPO₄, CaAlSiN₃ or a combination thereof. Preferably, said preferred host lattice of the second luminescent material is doped with one or more ions selected from of the group consisting of Eu²⁺, Pb²⁺, Bi³⁺ and Ce³⁺, more preferably Eu²⁺ or Ce³⁺ in combination with Tb³⁺, most preferably Ce³⁺ in combination with Tb³⁺.

Preferably, the host lattice of the second luminescent material or precursor thereof is a garnet, such as Y₃Al₅O₁₂ ("YAG") or Lu₃Al₅O₁₂ ("LuAG") or a combination thereof. Most preferably, the host lattice is selected from the group consisting of Y₃Al₅O₁₂ ("YAG") or Lu₃Al₅O₁₂ ("LuAG") or a combination thereof and the dopant includes Ce³⁺, optionally in combination with Tb³⁺.

Preferably, in the case of Ce³⁺ doping, the second luminescent material has a host lattice doped at a level of about 0.05-5%, more preferably about 0.1-4%.

Preferably, the first luminescent material comprises Y₂O₃:RE, wherein RE is europium(III), and the second luminescent material comprises composite luminescent particle according to the invention, wherein B is cerium and/or terbium. More preferably, the Y₂O₃:RE material is provided as nanoparticles.

In a preferred embodiment, the first luminescent material comprises rare-earth metal doped nanoparticles, wherein the rare earth metal is europium(III), and the second luminescent material comprises the composite luminescent particles according to the invention, comprising (A₁₋ₓBₓ)₃(C_{1-y}D_{y})₅O₁₂ nanoparticles, wherein B is cerium(III) and/or terbium(III).

In a preferred embodiment, both the first luminescent material and the second luminescent material are comprised in the luminescent composite particle of the invention. Preferably, the first luminescent material and the second luminescent material form separate domains within the oxide material, wherein said domains have dimensions, and the D₅₀ value of the smallest dimension of said domains is ≥ 0.5 nm and <_ 100 nm, more preferably ≥ 0.5 nm and <_ 50 nm, most preferably >_ 0.5 nm and <_ 20 nm, as measured using transmission electron microscopy (TEM). Preferably, the D₅₀ value of the domains is > 0.5 nm and ≤ 100 nm, more preferably ≥ 0.5 nm and ≤ 50 nm, most preferably ≥ 0.5 nm and ≤ 20 nm. The domain size thus does not include the oxide material coating. Domains of such sizes are suited to FRET. Such small domains are desirable, as they have a high surface area. The oxide material forms a stable matrix around said domains, thus preventing ion exchange or quenching. Additionally, the oxide material keeps the domains in place, such that the inter-domain distance stays the same, regardless of post-treatment.

The invention further relates to a light-emitting device comprising the composite luminescent particles of the invention, or the luminescent composition of the invention. Preferably the light-emitting device further comprises an excitation source for the luminescent material, such as for the second luminescent material. Preferably the excitation source is a UV-A, violet, or blue light emitting material which emits light towards the luminescent material with a wavelength of 315-400 nm (UV-A), 400-440 nm (violet), or 440-480 nm (blue), more preferably between 430-465 nm.

The light emitting device may be constructed from a blue emitting LED with the composite luminescent particles or luminescent composition according to the inventions deposited on top of the LED chip. The composite luminescent particles according to the invention may be bound in a polymer or silicone slurry that is deposited on the blue LED chip and subsequently cured.

The invention further relates to a lighting system comprising a light emitting device according to the invention. Preferably, the lighting system is selected from the group consisting of a lamp or luminaire, office lighting systems, household application systems, shop lighting systems, home lighting systems, accent lighting systems, spot lighting systems, theatre lighting systems, fibre-optics application systems, projection systems, self-lit display systems, pixelated display systems, segmented display systems, warning sign systems, medical lighting application systems, indicator sign systems, and decorative lighting systems, portable systems, automotive applications and green house lighting systems.

The invention further relates to the use of luminescent compositions according to the invention or luminescent materials comprising the composite luminescent particles of the invention as a taggant. A taggant is a marker added to materials to allow various forms of testing. The overall excitation/emission spectra of the composite luminescent particles and/or luminescent compositions according to the invention may have unique signatures, compared to conventional approaches, such that they may be useful as taggants in anti-counterfeiting applications. For instance, US7667828B discloses a tagging system containing multiple types of taggants that differ from each other.

The invention is further defined in the following clauses, which are non-limiting and can be combined with the previous description paragraphs:
1. A method for providing composite luminescent particles, comprising:
   (a) providing (i) a luminescent material, comprising (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; C comprises one or more of aluminum, gallium, and scandium; D comprises one or more transition metal ions; and wherein 0≤x≤1, 0≤y≤1, and x+y>0; and (ii) further providing a precursor of an oxide material, wherein said oxide material has a melting point of at least 850°C;
   (b) mixing said (i) luminescent material comprising (A₁₋ₓBₓ)₃(C_{1-y}D_{y})₅O₁₂ nanoparticles and (ii) said precursor of an oxide material;
   (c) curing said precursor of said oxide material to obtain a cured particle, said cured particle comprising said luminescent material, and a coating of said oxide material;
   (d) heating said cured particle at a first temperature for a first duration, wherein said first temperature is 600 °C or higher, wherein said first duration is 10 minutes or more; and
   (e) heating said cured particle under a reducing atmosphere comprising carbon monoxide at a second temperature for a second duration, wherein said second temperature is 700 °C or higher, and wherein said second duration is 1 hour or more;
   wherein preferably said (A₁₋ₓBₓ)₃(C_{1-y}D_{y})₅O₁₂ nanoparticles are obtained by a solvothermal method, more preferably by a glycothermal method.
2. A method for obtaining composite luminescent particles comprising:
   (a) providing (i) a precursor material for (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; C comprises one or more of aluminum, gallium, and scandium; D comprises one or more transition metal ions; and wherein 0≤x≤1, 0≤y≤1, and x+y>0; and (ii) further providing a precursor of an oxide material, wherein said oxide material has a melting point of at least 850°C;
   (b) mixing (i) said precursor material and (ii) said precursor of an oxide material;
   (c) curing said precursor of said oxide material to obtain a cured particle, said cured particle comprising said precursor material, and a coating of said oxide material;
   (d) heating said cured particle at a first temperature for a first duration, wherein said first temperature is 600 °C or higher, wherein said first duration is 10 minutes or more; and
   (e) heating said cured particle under a reducing atmosphere comprising carbon monoxide at a second temperature for a second duration, wherein said second temperature is 700 °C or higher, and wherein said second duration is 1 hour or more;
   wherein said precursor material is preferably obtained from a precipitation method.
3. The method according to clause 1 or 2, wherein:
   B comprises one or more of the group of cerium, terbium, europium,
   preferably wherein B comprises cerium and C comprises aluminum.
4. The method according to any one of clauses 1-3, wherein:
   - said first temperature is 800 °C or higher, preferably 900 °C or higher, and preferably 1500 °C or lower, more preferably 1250 °C or lower;
   - said first duration is 10 minutes or more, preferably 1 hour or more, and preferably 8 hours or less, more preferably 5 hours or less, most preferably 3 hours or less; and/or
   - wherein the heating said mixture at a first temperature for a first duration is performed in an atmosphere, wherein the atmosphere is air or an inert gas.
5. The method according to any one of clauses 1-4, wherein:
   - said reducing atmosphere comprises carbon monoxide;
   - said second temperature is 900 °C or higher, and preferably 1150 °C or lower;
   - said second duration is 8 hours or more, preferably 16 hours or more, more preferably 24 hours or more, and preferably 40 hours or less, more preferably 30 hours or less.
6. The method according to clause 5, wherein heating under a reducing atmosphere is performed by having the mixture in a first crucible, said first crucible being contained in a closed second crucible, said second crucible further containing a carbon source.
7. The method according to any preceding clause, wherein said precursor of an oxide material is selected from the groups of organosilicates, silicon salts, aluminium salts, phosphate salts, and magnesium salts, preferably wherein said salts are selected from nitride salts or halide salts, and/or said precursor is an ester of orthosilicic acid, and/or wherein said step c) comprises a hydrolysis reaction, preferably wherein said oxide material is silica and step c) comprises adding ammonia to cure the precursor of said oxide material.
8. The method according to any preceding clause, wherein in step (a) there is also provided (iii) a further luminescent material comprising nanoparticles of a rare-earth, s2-configuration ion or transition metal doped phosphor material, or a precursor thereof.
9. The method according to clause 8, wherein said doped phosphor material comprises oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these,
   preferably selected from the group of oxides, garnets, phosphates, vanadates, or a combination thereof,
   more preferably selected from the group consisting of Y₃A₅O₁₂, Lu₃Al₅O₁₂, Y₂O₃, YVPO₄, YVO₄, or LaPO₄, or a combination thereof.
10. The method according to clause 8 or 9, wherein step b) is performed in a single step such that a single mixture is formed.
11. The method according to clause 8 or 9, wherein the method step b) comprises:
   b1) mixing in a first vessel (i) said luminescent material comprising (A₁₋ₓBₓ)₃(C_{1-y}D_{y})₅O₁₂ nanoparticles or said precursor material for (A₁₋ₓBₓ)₃(C_{1-y}D_{y})₅O₁₂ nanoparticles, with (ii) said precursor of an oxide material, and in a second vessel mixing (iii) said further luminescent material, or a precursor material thereof, with (ii) said precursor of an oxide material;
   b2) optionally, at least partly curing at least one of said resultant mixtures; and
   b3) mixing said optionally at least partly cured mixtures.
12. The method according to any preceding clause, further comprising at least partially removing said oxide material, preferably by milling or etching, wherein said etching preferably is NaOH etching; preferably further comprising, after at least partially removing said oxide material, heating the particle under a reducing atmosphere at a third temperature for a third duration, wherein said third temperature is 500 °C or higher, and wherein said third duration is 1 hour or more.
13. A composite luminescent particle obtained via the method of any preceding clause, comprising (i) (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements, C comprises one or more of aluminum, gallium, and scandium, D comprises one or more transition metal ions, and 0≤x≤1, 0≤y≤1, and x+y>0; and (ii) a coating of an oxide material having a melting point of 850°C or higher, said composite luminescent particle having:
   - a photoluminescence quantum yield of more than 60%, preferably more than 80%;
   - a storage photostability such that the photoluminescence intensity after two weeks of storage in a non-inert atmosphere is at least 80% of the initial photoluminescence intensity;
   - a photostability under illumination such that at least 50% of the initial photoluminescence intensity remains after 10 hours, preferably at least 50% of the initial photoluminescence intensity after 15 hours, under > 0.1 W/cm² illumination at a suitable excitation wavelength; and
   - preferably, when B comprises cerium, a peak ratio in the excitation spectra (between 455 nm and 380 nm) of more than 20.
14. A luminescent particle obtainable via the method according to clause 12,
   wherein said luminescent particle comprises (i) at least one (A₁₋ₓBₓ)₃(C_{1-y}D_{y})₅O₁₂ nanoparticle, wherein A comprises one or more of yttrium, lutetium, gadolinium, lanthanum; B comprises one or more rare earth elements, C comprises one or more of aluminum, gallium, and scandium, D comprises one or more transition metal ions, and 0≤x≤1, 0≤y≤1, and x+y>0, and preferably (ii) a coating of an oxide material having a melting point of 850°C or higher, wherein said coating has a thickness of more than 0 nm and less than 5 nm;
   preferably wherein said luminescent particle has:
      - a photoluminescence quantum yield of more than 60%, preferably more than 80%;
      - a storage photostability such that the photoluminescence intensity after two weeks of storage in a non-inert atmosphere is at least 80% of the initial photoluminescence intensity;
      - a photostability under illumination such that at least 50% of the initial photoluminescence intensity remains after 10 hours, preferably at least 50% of the initial photoluminescence intensity after 15 hours, under > 0.1 W/cm2 illumination at a suitable excitation wavelength; and
      - preferably, when B comprises cerium, a peak ratio in the excitation spectra (between 455 nm and 380 nm) of more than 20.
15. The composite luminescent particle according to clause 14 or luminescent particle according to clause 15, wherein A comprises at least one selected from the group of yttrium, lutetium, and B comprises at least one of cerium, terbium and europium, preferably wherein C is aluminum and B is cerium, europium, terbium or a combination of terbium and europium:
   - when B comprises cerium, the molar concentration of cerium on the combined total of A and B is 0.05-5%;
   - when B comprises europium, the molar concentration of europium on the combined total of A and B is 0.1-20%; and/or
   - when B comprises terbium, the molar concentration of terbium on the combined total of A and B is 20-100%.
16. A luminescent composition, comprising a first luminescent material and a second luminescent material, wherein at least one of the first luminescent material and the second luminescent material comprises the composite luminescent particle or luminescent particle of any one of clauses 13-15,
   preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material, more preferably wherein the first luminescent material and the second luminescent material so arranged to each other to allow non-radiative energy transfer from the second luminescent material to the first luminescent material,
   more preferably wherein both the first luminescent material and the second luminescent material comprise composite luminescent particles or luminescent particles according to any one of clauses 13-15.
17. A luminescent composition, obtained by the method according to any of clauses 8-12, comprising (i) a first luminescent material comprising (A₁₋ₓBₓ)₃(C_{1-y}D_{y})₅O₁₂ nanoparticles and (ii) a second luminescent material comprising nanoparticles of a rare-earth, s2-configuration ion or transition metal doped phosphor material,
   preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material, more preferably wherein the first luminescent material and the second luminescent material so arranged to each other to allow non-radiative energy transfer from the second luminescent material to the first luminescent material.
18. The composite luminescent particle or luminescent particle of any of clauses 13-15, or the luminescent composition according to clause 16 or 17, characterized in that the composite luminescent particle, luminescent particle, or luminescent composition comprises at least traces of an oxide material, wherein preferably the oxide material is selected from the group of silicon oxides, aluminium oxides, phosphates, or magnesium oxide.
19. Light emitting device comprising the composite luminescent particle or luminescent particle of clause 13, 14, 15 or 18, or the luminescent composition according to clause 16, 17 or 18, and a violet and/or blue light emitting semiconductor material.
20. A system comprising the luminescent composition according to any one of clauses 16-18 and/or a light emitting device according to clause 19, the system being one or more of the following:
   a. office lighting systems
   b. household application systems
   c. shop lighting systems,
   d. home lighting systems,
   e. accent lighting systems,
   f. spot lighting systems,
   g. theatre lighting systems,
   h. fibre-optics application systems,
   i. projection systems,
   j. self-lit display systems,
   k. pixelated display systems,
   l. segmented display systems,
   m. warning sign systems,
   n. medial lighting application systems,
   o. indicator sign systems, and
   p. decorative lighting systems
   q. portable systems
   r. automotive applications
   s. green house lighting systems
   t. display backlighting
   u. emissive displays
   v. microLEDs
21. Use of a composite luminescent particle, luminescent particle, or luminescent composition according to any one of clauses 13-18 as a taggant, for example in applications such as anti-counterfeiting.

### Examples:

### Synthesis methods of nanoparticles

### Co-precipitation synthesis of YAG:Ce precurors:

YAG:Ce (0.5%) precursors were synthesized via a co-precipitation method. In a vessel, stoichiometric amount of metal nitrate hydrate salts were dissolved in water. For a 20 g yield, the yttrium and cerium salt precursors were calculated (34.5 g and 0.15 g, respectively) and dissolved in 300 ml deionized water. In an another vessel, the respective stoichiometric aluminum salt was calculated (56.3 g) and dissolved in 300 ml deionized water. Both solutions were mixed and stirred using magnetic stirrer. The precipitant solution was prepared by dissolving 52.1 g ammonium bicarbonate (AHC) in 528 ml deionized water. 132 ml of ammonia solution (32% ammonia in water) was added to this solution and stirred using magnetic stirrer. The co-precipitation reaction was carried out using a micro-jet reactor (MJR), where both metal salts and precipitants were forced to react in a micro-reactor (300 µm cavity size). The flow rate was maintained at 40 ml/min for both precursors and precipitants and the final precipitate was collected. The precipitate then washed with water for several times and dried. The surface area of precursor nanoparticles was measured using BET physisorption method, and is in the range of 130-180 m²/g.

The nano-YAG precursor sample is amorphous in nature, so does not show emission.

### Solvothermal synthesis of YAG:Ce

YAG:Ce (0.5%) nanoparticles were prepared by a glycothermal method following the process disclosed in (J. Mater. Chem. C, 2017,5,12561). This process yields individual nanoparticles of size < 10 nm. Here, the metal-acetate hydrates and alkoxides were used and mixed together in 1,4-butanediole and diethyl glycol (85:15 volume ratio). For 10 g yield, 200 ml of solvents was used. The mixture was then inserted in an autoclave vessel and heated to 300 - 350 °C for 1- 2 hours under stirring. The sample was retrieved after cooling and washed with ethanol and -acetone several times to obtain the YAG:Ce nanoparticles.

### Comparative Experiments A-B: nano-YAG:Ce annealing without protective matrix

In Comparative Experiment A, the nano-YAG precursor obtained using the co-precipitation method as discussed above were annealed at 1025 °C in air for 2 hours and at 1025°C in reducing atmosphere for 24 hours. The reducing atmosphere in these examples was created by placing the sample crucible inside a bigger covered crucible with activated carbon in it. This double-crucible setup creates a CO atmosphere at high temperature due to limited oxygen and supplies reducing atmosphere.

In Comparative Experiment B, the YAG:Ce nanoparticles obtained via the solvothermal process as discussed above were annealed in the same manner.

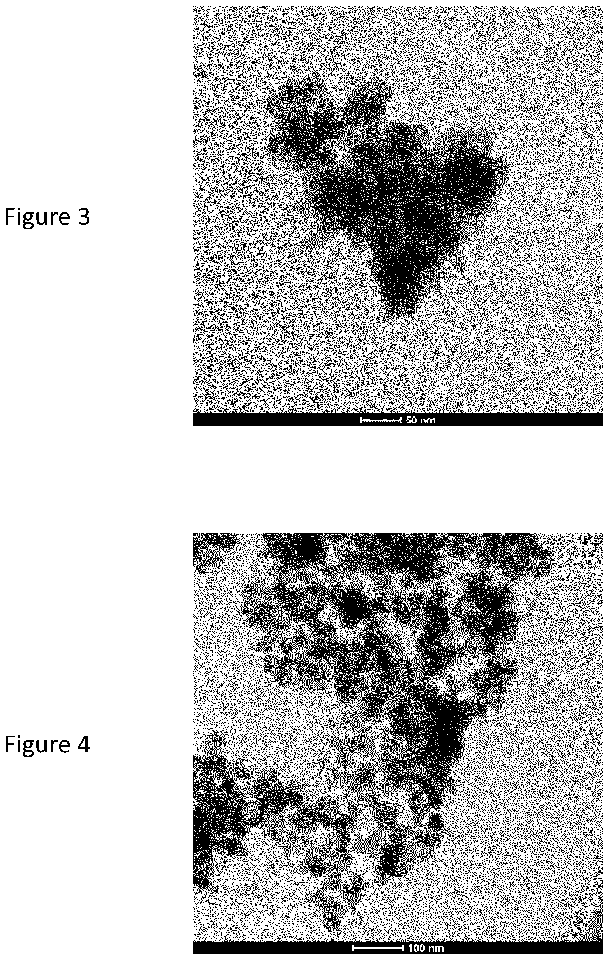

Figure 2 shows the TEM image of the nanoparticles obtained via co-precipitation after baking. The surface area of annealed nanoparticles was measured using BET physisorption method. For co-precipitation method synthesized nano-YAG, the average BET surface area is about 20 m²/g. Figure 3 shows the TEM image of the nanoparticles obtained via solvothermal method. The nanoparticles are relatively sintered and an aggregated morphology was observed.

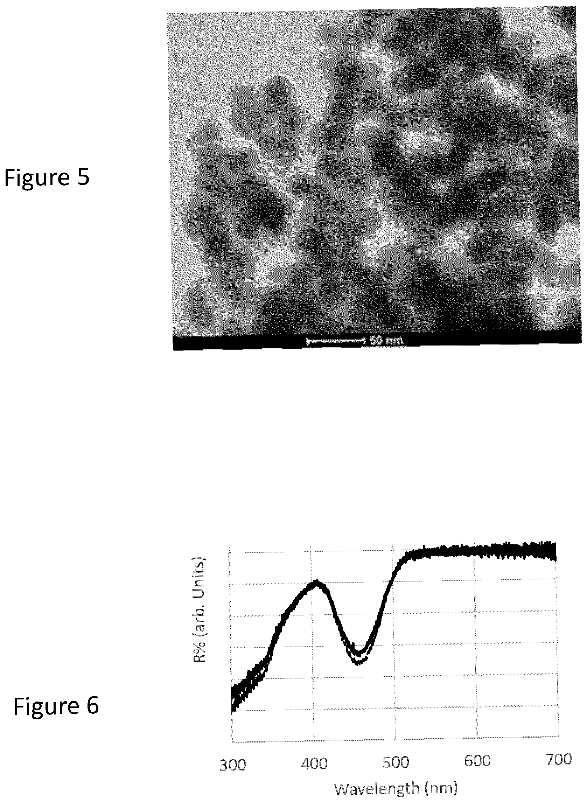

The PL properties were improved after the heating steps. The maximum PLQY for either was about 85%. Figure 6 shows the reflectance spectrum of Comparative Experiment A (thin dashed line).

### Comparative Experiments C-D: nano-YAG:Ce annealing in salt matrix

Salt encapsulation of the nano-YAG precursor obtained via the co-precipitation method and the nanoparticles obtained via the solvothermal process as discussed above was performed: A 0.5 M K₂SO₄ solution in water was prepared. The YAG:Ce nanoparticles or nano-YAG precursor particles were mixed with K₂SO₄ solution to obtain a 1:10 YAG(-precursor): K₂SO₄ wt. ratio dispersion. The mixing was enhanced by sonification in an ultrasonic bath for 30 minutes. Acetone was added in a 1:8 acetone:reaction mixture volume ratio. The mixture was centrifuged, washed with acetone, and the sediment was dried.

In Comparative Experiment C, the nano-YAG precursor particles obtained via the co-precipitation method were salt encapsulated. One sample was annealed at 1025 °C in air for 2 hours, followed by annealing at 800 °C in reducing atmosphere comprising carbon monoxide for 8 hours. Another sample was only annealed at 1025 °C in air for 2 hours. The nanoparticles were washed several times with water to remove the K₂SO₄. The luminescence of the single air annealed and air-CO two-step annealed samples was measured. The single annealed sample shows broad yellow emission and the two-step annealed sample exhibits improved emission properties. The PLQY of the two-step annealed sample was improved to around 80 - 85%. The salt-matrix avoids sintering during heat-treatment.

In Comparative Experiment D, the YAG:Ce nanoparticles obtained via the solvothermal process were salt encapsulated. One sample was annealed at 1025 °C in air for 2 hours, followed by annealing at 800 °C in reducing atmosphere comprising carbon monoxide for 8 hours. Another sample was only annealed at 1025 °C in air for 2 hours. The nanoparticles were washed several times with water to remove the K₂SO₄.

The luminescence of the single air annealed and air-CO two-step annealed samples was measured. The PLQY of the single air annealed sample was about 70% and it improved to 75-80% after two-step annealing. The salt-matrix avoids sintering during heat-treatment.

### Comparative Experiments E-F: Silica encapsulation, single air annealing

Silica encapsulation of the nano-YAG precursor obtained via the co-precipitation method and the nanoparticles obtained via the solvothermal process as discussed above was performed:
In Comparative Experiment E, the nano-YAG precursor particles obtained via the co-precipitation method were silica encapsulated. Approximately 200 mg of YAG:Ce precursor was dispersed in 10 ml of water and 10 ml of ethanol. The mixture was then sonicated for 10 minutes. 0.020 ml of the silica precursor, tetra-ethyl ortho-silicate (TEOS), was added dropwise under constant stirring. The mixture was then stirred for 24 hours and cured with ammonia. Finally, the mixture was heated at 105 °C to dry completely.
In Comparative Experiment F, the nano-YAG particles obtained via the solvothermal process were silica encapsulated. Approximately 200 mg of YAG:Ce nanoparticles was dispersed in 10 ml of water and 10 ml of ethanol. The mixture was then sonicated for 10 minutes. 0.320 ml of the silica precursor, tetra-ethyl ortho-silicate (TEOS), respectively, was added dropwise under constant stirring. The mixture was then stirred for 24 hours and cured with ammonia. Finally, the mixture was heated at 105 °C to dry completely.

The samples were annealed at 1025 °C in air for 2 hours. The samples were ground to obtain a fine powder.

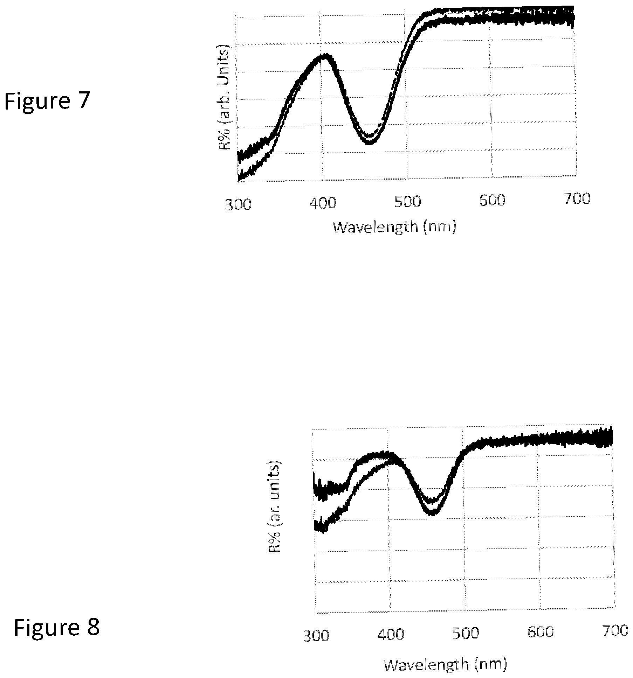

The luminescence of the single air annealed samples was measured. The sample obtained from co-precipitation had a PLQY of about 85%, and its reflectance spectrum is shown in Figure 7 (thin dashed line). The sample obtained via solvothermal method had a PLQY of about 80%, and its reflectance spectrum is shown in Figure 8 (thin dashed line).

### Comparative Experiment G: Silica encapsulation, single CO annealing

YAG:Ce nanoparticles obtained via the solvothermal process were encapsulated in silica as in Comparative Experiment F. The sample was annealed in a reducing atmosphere comprising carbon monoxide at 1025 °C for 24 hours. The sample was ground to a fine powder.

The luminescence of the single CO annealed sample was measured. The PLQY was <90%. The samples showed aggregated particles inside the silica matrix.

### Example 1: Silica encapsulation, two-step annealing, co-precipitation synthesis

YAG:Ce precursor particles were obtained via the co-precipitation method detailed above. The precursor particles were encapsulated in silica according to the method of Comparative Experiment E.

The sample was annealed at 1025 °C in air for 2 hours and at 1025 °C in reducing atmosphere comprising carbon monoxide for 24 hours. The annealed sample was ground to obtain a fine powder.

The luminescence was measured. The emission intensity and PLQY were improved compared to Comparative Experiments A, C and E. The PLQY was >95%.

The sample showed improved absorption due to Ce³⁺ over two-step annealed nanoparticles without a protective matrix (Comparative Experiment 1), and reduced absorption below 400 nm (Figure 6). This effect can be assigned to surface coating by silica, which helps in reducing surface defects and Ce oxidation. Thus, overall silica helps in surface defect passivation and improving the Ce3+/Ce4+ equilibrium.

The reflectance spectra of Comparative Experiment E and Example 1 (Figure 7) shows that the two-step baking improves Ce³⁺ absorption in the blue spectrum, compared to the air-only annealed Comp. Ex. E. Also, the UV absorption below 400 nm is reduced by the second annealing step, which is a combined effect arising from the reduction of dangling bonds, Ce⁴⁺ and amorphous silica.

TEM images show relatively smaller and less aggregated particles (Figure 4)._The surface area of annealed nano-particles was measured using BET physisorption method, and the average BET surface area is in the range of 30 - 50 m²/g.

### Example 2: Silica encapsulation, two-step annealing, solvothermal synthesis

YAG:Ce nanoparticles were obtained via the solvothermal process detailed above. The nanoparticles were encapsulated in silica as in Comparative Experiment F.

The sample was annealed at 1025 °C in air for 2 hours and at 1025 °C in reducing atmosphere comprising carbon monoxide for 24 hours. The annealed sample was ground to obtain a fine powder.

The luminescence was measured. The emission intensity and PLQY were improved compared to Comparative Experiments B, D, F and G. The PLQY was >95%.

The reflectance spectra of Comparative Experiment F and Example 2 (Figure 8) shows that the two-step baking improves Ce³⁺ absorption in the blue spectrum, compared to the air-only annealed Comp. Ex. F. Also, the UV absorption below 400 nm is reduced by the second annealing step, which is a combined effect arising from the reduction of dangling bonds, Ce⁴⁺ and amorphous silica.

TEM images show relatively smaller and less aggregated particles (Figure 5).

### Example 3: Silica encapsulation, two-step annealing and etching with alkali solution, solvothermal synthesis

YAG:Ce nanoparticles were obtained via the solvothermal process detailed above. The nanoparticles were encapsulated in silica as in Comparative Experiment F.

The sample was annealed at 1025 °C in air for 2 hours and at 1025 °C in reducing atmosphere comprising carbon monoxide for 24 hours. The annealed sample was ground to obtain a fine powder.

The obtained sample was then etched with 2 M NaOH solution. 200 mg of the sample was added to 10 ml of 2M NaOH solution and stirred for 24 hours. The sample was then washed with water, centrifuged, and the washing procedure was twice repeated. The obtained sample was then dried at 105 °C.

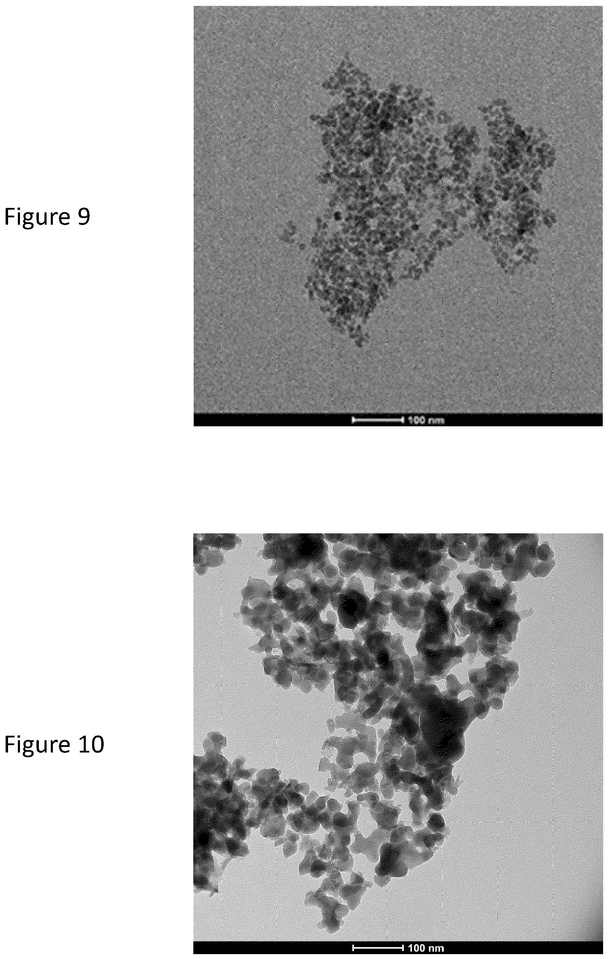

The luminescence was measured. The emission intensity and PLQY were decreased compared to Example 2. The PLQY was <70%. The surface area measurement by nitrogen physisorption method reveals an increase in surface area from 50 m²/g in pre-etched sample to 80 m²/g after etching with 2M NaOH solution for 24 hours. The increased surface area suggests reduction in particle size. The TEM image (figure 9) shows individual nanoparticles after etching.

### Example 4: Silica encapsulation, two-step annealing and etching with alkali solution and reannealing at 800 °C, solvothermal synthesis

YAG:Ce nanoparticles were obtained via the solvothermal process detailed above. The nanoparticles were encapsulated in silica as in Comparative Experiment F.

The sample was annealed at 1025 °C in air for 2 hours and at 1025 °C in reducing atmosphere comprising carbon monoxide for 24 hours. The annealed sample was ground to obtain a fine powder.

The obtained sample then etched with 2 M NaOH solution. To do this, 200 mg of annealed silica coated nanoYAG was added to 10 ml of 2M NaOH solution and stirred for 24 hours. The sample then washed with water, centrifuged and repeated the washing procedure two times. The obtained sample then dried at 105 °C. The dried powder annealed again in reducing atmosphere at 800 °C for 8 hours.

The luminescence was measured. The emission intensity and PLQY were improved compared to Example 3. The PLQY was >85%. The surface area measurement by nitrogen physisorption method reveals the surface area of re-annealed sample is 77 m²/g. This is slightly lower than 80 m²/g surface area of etched sample suggesting a slight change in densification, but reveals clearly smaller particle sizes than before the etching. The TEM image (figure 10) shows the morphology of nanoparticles after re-annealing

| | Synthesis method | Encapsulation | 1025°C in air | CO atmosphere | Quantum yield |
|---|---|---|---|---|---|
| Comp Ex A | Co-precipitation | None | 2 hours | 1025°C, 24 hours | 85% |
| Comp Ex B | Solvothermal | None | 2 hours | 1025°C, 24 hours | 85% |
| Comp Ex C | Co-precipitation | Salt | 2 hours | 800 °C, 8 hours | 80-85% |
| Comp Ex D | Solvothermal | Salt | 2 hours | 800 °C, 8 hours | 70-75% |
| Comp Ex E | Co-precipitation | Silica | 2 hours | - | ∼85% |
| Comp Ex F | Solvothermal | Silica | 2 hours | - | ~80% |
| Comp Ex G | Solvothermal | Silica | - | 1025°C, 24 hours | <90% |
| Example 1 | Co-precipitation | Silica | 2 hours | 1025°C, 24 hours | >95% |
| Example 2 | Solvothermal | Silica | 2 hours | 1025°C, 24 hours | >95% |
| Example 3 | Solvothermal | Silica, etched after baking | 2 hours | 1025 °C, 24 hours | <70% |
| Example 4 | Solvothermal | Silica, removed after baking | 2 hours | 1025 °C, 24 hours | >85% |

## Claims

1. A method for providing composite luminescent particles, comprising:
(a) providing (i) a luminescent material, comprising (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; C comprises one or more of aluminum, gallium, and scandium; D comprises one or more transition metal ions; and wherein 0≤x≤1, 0≤y≤1, and x+y>0; and (ii) further providing a precursor of an oxide material, wherein said oxide material has a melting point of at least 850°C;
(b) mixing said (i) luminescent material comprising (A₁₋ₓBₓ)₃(C_{1-y}D_{y})₅O₁₂ nanoparticles and (ii) said precursor of an oxide material;
(c) curing said precursor of said oxide material to obtain a cured particle, said cured particle comprising said luminescent material, and a coating of said oxide material;
(d) heating said cured particle at a first temperature for a first duration, wherein said first temperature is 600 °C or higher, wherein said first duration is 10 minutes or more; and
(e) heating said cured particle under a reducing atmosphere comprising carbon monoxide at a second temperature for a second duration, wherein said second temperature is 700 °C or higher, and wherein said second duration is 1 hour or more;
wherein preferably said (A₁₋ₓBₓ)₃(C_{1-y}D_{y})₅O₁₂ nanoparticles are obtained by a solvothermal method, more preferably by a glycothermal method.

2. A method for obtaining composite luminescent particles comprising:
(a) providing (i) a precursor material for (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements; C comprises one or more of aluminum, gallium, and scandium; D comprises one or more transition metal ions; and wherein 0≤x≤1, 0≤y≤1, and x+y>0; and (ii) further providing a precursor of an oxide material, wherein said oxide material has a melting point of at least 850°C;
(b) mixing (i) said precursor material for (A₁₋ₓBₓ)₃(C_{1-y}D_{y})₅O₁₂ and (ii) said precursor of an oxide material;
(c) curing said precursor of said oxide material to obtain a cured particle, said cured particle comprising said precursor material for (A₁₋ₓBₓ)₃(C_{1-y}D_{y})₅O₁₂, and a coating of said oxide material;
(d) heating said cured particle at a first temperature for a first duration, wherein said first temperature is 800 °C or higher, wherein said first duration is 10 minutes or more; and
(e) heating said cured particle under a reducing atmosphere comprising carbon monoxide at a second temperature for a second duration, wherein said second temperature is 700 °C or higher, and wherein said second duration is 1 hour or more;
wherein said precursor material is preferably obtained from a precipitation method.

3. The method according to claim 1 or 2, wherein:
B comprises one or more of the group of cerium, terbium, europium,
preferably wherein B comprises cerium and C comprises aluminum.

4. The method according to any one of claims 1-3, wherein:
- said first temperature is 800 °C or higher, preferably 900 °C or higher, and preferably 1500 °C or lower, more preferably 1250 °C or lower;
- said first duration is 10 minutes or more, preferably 1 hour or more, and preferably 8 hours or less, more preferably 5 hours or less, most preferably 3 hours or less; and/or
- wherein the heating said mixture at a first temperature for a first duration is performed in an atmosphere, wherein the atmosphere is air or an inert gas.

5. The method according to any one of claims 1-4, wherein:
- said second temperature is 750 °C or higher, and preferably 1150 °C or lower;
- said second duration is 8 hours or more, preferably 16 hours or more, more preferably 24 hours or more, and preferably 40 hours or less, more preferably 30 hours or less.

6. The method according to claim 5, wherein heating under a reducing atmosphere is performed by having the mixture in a first crucible, said first crucible being contained in a closed second crucible, said second crucible further containing a carbon source.

7. The method according to any preceding claim, wherein said precursor of an oxide material is selected from the groups of organosilicates, silicon salts, aluminium salts, phosphate salts, and magnesium salts, preferably wherein said salts are selected from nitride salts or halide salts, and/or said precursor is an ester of orthosilicic acid, and/or wherein said step c) comprises a hydrolysis reaction, preferably wherein said oxide material is silica and step c) comprises adding ammonia to cure the precursor of said oxide material.

8. The method according to any preceding claim, wherein in step (a) there is also provided (iii) a further luminescent material comprising nanoparticles of a rare-earth, s2-configuration ion or transition metal doped phosphor material, or a precursor thereof;
preferably wherein said doped phosphor material comprises oxides, fluorides, nitrides, borates, garnets, molybdates, phosphates, vanadates, chlorides, sulfides, selenides, silicates, aluminates, oxyfluorides, oxychlorides, oxynitrides, oxysulfides, oxyselenides, fluorochlorides, fluorosilicates and fluorobromides or combinations of these,
more preferably selected from the group of oxides, garnets, phosphates, vanadates, or a combination thereof,
most preferably selected from the group consisting of Y₃A₅O₁₂, Lu₃Al₅O₁₂, Y₂O₃, YVPO₄, YVO₄, or LaPO₄, or a combination thereof.

9. The method according to claim 9, wherein step b) is performed in a single step such that a single mixture is formed, or wherein the method step b) comprises:
b1) mixing in a first vessel (i) said luminescent material comprising (A₁₋ₓBₓ)₃(C_{1-y}D_{y})₅O₁₂ nanoparticles or said precursor material for (A₁₋ₓBₓ)₃(C_{1-y}D_{y})₅O₁₂ nanoparticles, with (ii) said precursor of an oxide material, and in a second vessel mixing (iii) said further luminescent material, or a precursor material thereof, with (ii) said precursor of an oxide material;
b2) optionally, at least partly curing at least one of said resultant mixtures; and
b3) mixing said optionally at least partly cured mixtures.

10. The method according to any preceding claim, further comprising at least partially removing said oxide material, preferably by milling or etching, wherein said etching preferably is NaOH etching; preferably further comprising, after at least partially removing said oxide material, heating the particle under a reducing atmosphere at a third temperature for a third duration, wherein said third temperature is 500 °C or higher, and wherein said third duration is 1 hour or more.

11. A composite luminescent particle obtained via the method of any preceding claim, comprising (i) (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements, C comprises one or more of aluminum, gallium, and scandium, D comprises one or more transition metal ions, and 0≤x≤1, 0≤y≤1, and x+y>0; and (ii) a coating of an oxide material having a melting point of 850°C or higher, said composite luminescent particle having:
- a photoluminescence quantum yield of more than 60%, preferably more than 80%;
- a storage photostability such that the photoluminescence intensity after two weeks of storage in a non-inert atmosphere is at least 80% of the initial photoluminescence intensity;
- a photostability under illumination such that at least 50% of the initial photoluminescence intensity remains after 10 hours, preferably at least 50% of the initial photoluminescence intensity after 15 hours, under > 0.1 W/cm² illumination at a suitable excitation wavelength; and
- when B comprises cerium, a peak ratio in the excitation spectra (between 455 nm and 380 nm) of more than 20.

12. A composite luminescent particle obtainable via the method of claim 10, comprising (i) (A₁₋ₓBₓ)₃(C_{1-y}D_{y})₅O₁₂ nanoparticles, wherein A comprises one or more of yttrium, lutetium, gadolinium, lanthanum; B comprises one or more rare earth elements, C comprises one or more of aluminum, gallium, and scandium, D comprises one or more transition metal ions, and 0≤x≤1, 0≤y≤1, and x+y>0; and preferably (ii) a coating of an oxide material having a melting point of 850°C or higher, wherein said coating has a thickness of more than 0 nm and less than 5 nm;
preferably wherein said composite luminescent particle has:
- a photoluminescence quantum yield of more than 60%, preferably more than 80%;
- a storage photostability such that the photoluminescence intensity after two weeks of storage in a non-inert atmosphere is at least 80% of the initial photoluminescence intensity;
- a photostability under illumination such that at least 50% of the initial photoluminescence intensity remains after 10 hours, preferably at least 50% of the initial photoluminescence intensity after 15 hours, under > 0.1 W/cm² illumination at a suitable excitation wavelength; and
- preferably, when B comprises cerium, a peak ratio in the excitation spectra (between 455 nm and 380 nm) of more than 20.

13. The composite luminescent particle according to claim 11 or 12, wherein A comprises at least one selected from the group of yttrium, lutetium, and B comprises at least one of cerium, terbium and europium, preferably wherein C is aluminum and B is cerium, europium, terbium or a combination of terbium and europium:
- when B comprises cerium, the molar concentration of cerium on the combined total of A and B is 0.05-5%;
- when B comprises europium, the molar concentration of europium on the combined total of A and B is 0.1-20%; and/or
- preferably, when B comprises terbium, the molar concentration of terbium on the combined total of A and B is 20-100%.

14. A luminescent composition, comprising a first luminescent material and a second luminescent material, wherein at least one of the first luminescent material and the second luminescent material comprises the composite luminescent particle of any one of claims 11-12,
preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material, more preferably wherein the first luminescent material and the second luminescent material so arranged to each other to allow non-radiative energy transfer from the second luminescent material to the first luminescent material,
more preferably wherein both the first luminescent material and the second luminescent material comprise composite luminescent particles according to any one of claims 11-12.

15. A luminescent composition, obtained by the method according to any of claims 9-10, comprising (i) a first luminescent material comprising (A₁₋ₓBₓ)₃(C_{1-y}D_{y})₅O₁₂ nanoparticles and (ii) a second luminescent material comprising nanoparticles of a rare-earth, s2-configuration ion or transition metal doped phosphor material,
preferably wherein the first luminescent material is capable of emitting light in a first wavelength range, and said second luminescent material is capable of absorbing light in a second wavelength range, and has an emission spectrum which overlaps at least partly with one or more of the excitation bands of said first luminescent material, more preferably wherein the first luminescent material and the second luminescent material so arranged to each other to allow non-radiative energy transfer from the second luminescent material to the first luminescent material.
